# EUROPEAN PATENT APPLICATION

(11) **EP 4 563 670 A1**
(43) Date of publication of application: **04.06.2025**
(21) Application number: 23845985.3
(22) Date of filing: 25.05.2023
(51) Int. Cl.: C09J 109/00, B60C 9/00, C09J 107/02, C09J 111/02, D06M 13/152, D06M 13/395, D06M 15/564, D06M 15/59, D06M 15/61

(54) **ADHESIVE COMPOSITION, ORGANIC FIBROUS MATERIAL, RUBBER ARTICLE, ORGANIC FIBER/RUBBER COMPOSITE, AND TIRE**

(30) Priority: 29.07.2022 JP 2022122326
(71) Applicant: BRIDGESTONE CORPORATION, Chuo-ku Tokyo 104-8340 (JP)
(72) Inventor: NAKAMURA Masaaki, Tokyo 104-8340 (JP)
(74) Representative: Marks & Clerk LLP
(86) International application number: PCT/JP2023/019569
(87) International publication number: WO 2024/024247

(57) **Abstract**

The present disclosure is directed to providing an adhesive composition that ensures the desired adhesion without the use of resorcin and does not compromise workability during use. The solution is an adhesive composition including (A) a rubber latex containing an unsaturated diene, (B) a compound containing an amide group and an amino group in a single molecule, and (C) an aqueous compound having a (thermally dissociable blocked) isocyanate group. The adhesive composition preferably further includes one or more components selected from (D) an aqueous component having a plurality of phenolic hydroxyl groups in a molecule, and (E) a polyvalent metal salt.

## Description

### TECHNICAL FIELD

The present disclosure relates to an adhesive composition, an organic fiber material, a rubber article, an organic fiber-rubber composite, and a tire.

### BACKGROUND

Conventionally, for the purpose of reinforcing rubber articles such as tires, organic fibers such as tire cords made of nylon fibers, polyester fibers, etc., and rubber compositions for tires are adhered together to form organic fiber-rubber composites. For adhesion, a generally-used method is used which involves coating the organic fibers with an adhesive composition, embedding the organic fibers into a rubber composition, and co-vulcanizing the fibers together with the rubber composition.

In the process of coating the organic fibers with the adhesive composition, a solvent is generally used to adjust the viscosity of the adhesive composition. Since the solvent volatilizes during this process, it is preferable to use water, which has a low environmental impact, as the solvent. Furthermore, when the organic fibers are coated with the adhesive composition through dipping, it is necessary to reduce the viscosity of the adhesive composition to an extent that enables application by dipping.

In general, components included in an aqueous adhesive composition which is designed to be soluble or dispersible in water need to have polar molecular structures. However, polymer materials such as rubber and organic fibers, which serve as the adherend, typically exhibit low polarity. If the polarity difference between the components contained in the adhesive composition and the surface of the rubber or organic fibers becomes too large, adhesion becomes difficult. Therefore, to use an aqueous adhesive composition as an adhesive composition for rubber articles, the components included in the adhesive composition must have polarity to become aqueous. Simultaneously, the polarity must be controlled to avoid significant differences with the polarity of the adherend to prevent reduction in adhesion. Thus, aqueous adhesive compositions that can balance these conflicting requirements are preferably used.

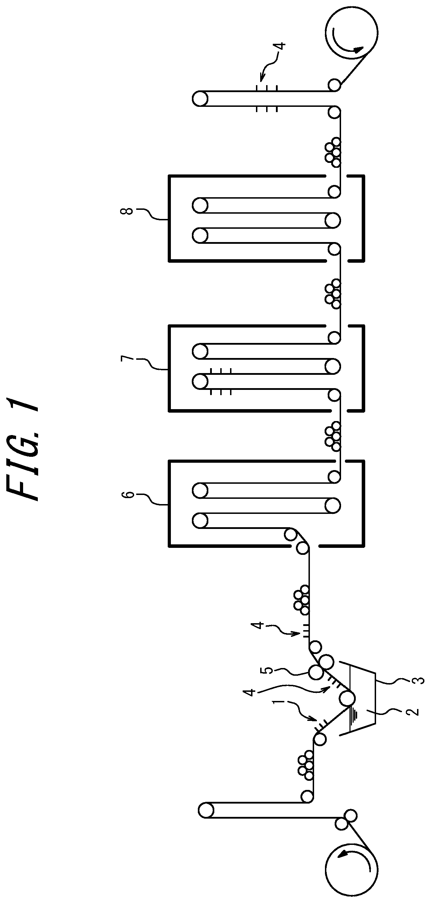

With regard to the process of coating the organic fibers with the adhesive composition, one example of the step of immersing an organic fiber cord, such as a tire cord, into the adhesive composition will be described with reference to FIG. 1.

An organic fiber cord 1 is unwound from an unwinding roll, conveyed by rolls, and immersed into the adhesive composition 2 in an immersion bath (dipping bath) 3. The organic fiber cord 4 coated with the adhesive composition 2 is then drawn out of the immersion bath 3, and excess adhesive composition 2 is removed using squeezing rolls 5. The coated organic fiber cord 4 is further conveyed by rolls to a drying zone 6, where it is dried. In a hot zone 7, the coated organic fiber cord 4 is subjected to thermal curing of the resin while being stretched under tension. In a normalizing zone 8, normalizing is performed to precisely adjust the tension to achieve the desired strength and elongation properties while the thermal curing of resin is continued. After being air-cooled outside the zones, the coated organic fiber cord 4 is wound onto a take-up roll. In this way, the organic fibers are coated with the adhesive composition.

Conventionally, compositions containing rubber latex components, such as rubber glue, have long been used as the adhesive composition. Specifically, an RFL (resorcin-formaldehyde-latex) adhesive composition obtained by aging a mixture containing resorcin, formaldehyde, and rubber latex was discovered. Then, adhesive compositions in which certain adhesion promoters were mixed into the RFL adhesive compositions have been used (see PTLs 1 to 4).

It is well known in the rubber industry that adhesive compositions comprising a water-dispersible rubber latex component and a phenolic resin obtained by mixing water-soluble resorcin and formaldehyde, followed by aging (PTL 1) exhibit the function to adhere to rubber serving as the adherend and also adhere strongly to the low-polarity substrate surfaces, such as the surface of an organic fiber. These RFL adhesive compositions are widely used globally. In the adhesion using the above-described RFL adhesive composition, the adhesion is first achieved by co-vulcanization with the side of rubber to be bonded through the inclusion of a rubber latex component. Furthermore, the phenolic resin component, which comprises a condensate of resorcin and formaldehyde included as the component for improving the adhesion to the organic fiber substrate, strongly bonds to the adherend substrate side.

Here, the reason why resorcin is preferably used is that resorcin can provide a phenolic condensation resin, which is a type of resin with high adhesion to resin adherends with high resistance to destructive strength. Additionally, the polar functional groups introduced into the phenol ring to achieve water solubility are hydroxyl groups, which have relatively low polarity and are less likely to cause steric hindrance, thereby serving as a resin component with high adhesion to organic fiber substrates.

The RFL adhesive composition is obtained by mixing resorcin, formaldehyde, and rubber latex in which rosin acid, etc., is used as an emulsifier during polymerization, in the presence of a basic composition and then allowing the mixture to mature. It is presumed that this causes resorcin dissolved in water and formaldehyde to undergo a resole-type condensation reaction under basic conditions (refer to PTL 2), and the rosin acid on the latex surface condensates with the methylol group at the end of the resole-type phenol-formaldehyde addition condensate (refer to NPL 1).

This maturation process leads to the crosslinking of latex with the resole-type resorcin-formaldehyde condensate through the rosin acid, strengthening the adhesion. The latex, in combination with the aqueous resin, forms an encapsulated and protected colloid. During processing of the adhesive composition in an apparatus, as the one illustrated in FIG. 1, since the rubber adhesion by the latex is suppressed, contamination due to the adhesion of the adhesive composition to the apparatus is reduced.

As for the adhesion promoters added to the above-described RFL adhesive composition, adhesion promoters that are aqueous, i.e., possessing the property of being soluble or dispersible in water, have been used to improve adhesion to the surface of a substrate with low polarity, such as an organic fiber cord, through the use of aqueous adhesive compositions.

As water-dispersible adhesion promoters, (blocked) isocyanates such as methylene diphenyl diisocyanate with a particle size of 0.01 to 0.50 µm (see PTL 3) and water-dispersed particles of non-water-soluble phenolic novolac-type resins, such as cresol novolac-type multifunctional epoxy resins (see PTL 4), have been used.

Additionally, as adhesion promoters having water-soluble groups, a sodium hydroxide solution of a novolac-type condensate obtained by reacting resorcin and formaldehyde through a novolac reaction (see PTL 5), phenolic resins such as novolac-type condensates of chlorophenols and formaldehyde that dissolve in water in the presence of basic substances such as ammonium solutions, and aqueous urethane compounds having (thermally dissociable blocked) isocyanate groups and self-water-soluble groups (see PTL 6) have been proposed.

However, in recent years, the reduction of the usage of resorcin, which has been used as a water-soluble component in RFL adhesive compositions, has been increasingly demanded from the perspective of reducing environmental impact.

To address this issue, various adhesive compositions using polyphenols that do not contain resorcin have been studied and proposed.

For example, adhesive compositions comprising rubber latex and a lignin resin (see PTL 7), or aqueous adhesive compositions based on rubber latex, polyphenols such as flavonoids, and aromatic polyaldehydes (see PTLs 8 and 9), are known as adhesive compositions that contain neither resorcin nor formaldehyde.

Additionally, PTL 10 discloses a diene-based copolymer latex containing aliphatic polyaminoamide-based compounds and coating liquid compositions using the same for offset printing paper. However, the coating liquid composition disclosed in PTL 10 is a coating composition for coating only one side, namely, the resin surface, not both the rubber and the resin. There is little prior knowledge regarding adhesive compositions that contain polyacrylamide for bonding the adherent rubber and adherent resin as an adhesive composition that does not contain resorcin and formaldehyde.

### CITATION LIST

### Patent Literature

PTL 1: US 2128229 A1
PTL 2: JP 2005-263887 A
PTL 3: JP 2006-37251 A
PTL 4: JP H9-12997 A
PTL 5: WO 97/013818 A1
PTL 6: JP 2011-241402 A
PTL 7: WO 2018/003572 A1
PTL 8: WO 2013/017421 A1
PTL 9: JP 2016-528337 A
PTL 10: JP H8-34879 A

### Non-patent Literature

NPL 1: Koichi Hakata, Network Polymer, Vol. 31, No. 5, p. 252 (2010)

### SUMMARY

### (Technical Problem)

However, when an adhesive composition for an organic fiber cord which does not contain resorcin as described above is used, the adhesion of the rubber latex, measured in terms of mechanical stability under the shear strain of the adhesive liquid, increases. As a result, for example, in the process of coating the organic fiber cord 1 with the adhesive composition 2 as illustrated in FIG. 1, followed by drying and thermal curing, the adhesion of the adhesive composition 2 to components such as the squeezing rolls 5 and the rolls in the drying zone 6 increased, resulting in a new problem of reduction in the workability in that process.

Furthermore, such adhesive compositions that contain neither resorcin nor formaldehyde (generally referred to as rubber glue) do not suppress the adhesion possessed by the rubber latex without a coating of a condensate of resorcin and formaldehyde. As a result, the surface of the adhesive coating tends to become roughened, particularly, due to the adhesion to the apparatus, which tends to decrease the adhesion. Furthermore, due to the inability to achieve crosslinking between the latex component and the resorcin-formaldehyde condensate, there is the issue that, compared to conventional RFL adhesive compositions, the adhesion between the organic fiber and a covering rubber composition is reduced.

Furthermore, as in PTL 7, when an aqueous adhesive composition is produced by mixing polyphenols mixed with rubber latex and adding aromatic dialdehydes such as terephthalaldehyde or 2,5-furandicarboxaldehyde, which have low solubility in water, the aromatic dialdehydes are difficult to be dissolved in water during the production, leading to insufficient workability. Additionally, compared to the resorcin-formaldehyde condensate that is water-soluble without the addition of an alkali, when the condensate is made from aromatic compounds with generally low water solubility and aromatic dialdehydes, the preparation step of the adhesive composition liquid will require the addition of an alkali to the phenolic group in order to make it water-soluble. As a result, in the subsequent adhesion between the adherent rubber and vulcanization adhesion, the amount of the base to be contained in the adhesive composition increases, and the vulcanization reaction of the rubber latex contained is generally accelerated. Therefore, another issue is that under prolonged heat exposure, the adhesion decreases due to over-vulcanization.

Furthermore, the adhesive compositions that do not contain resorcin as described above also have the issue of causing a decrease in the cord strength of the organic fiber cord coated with the adhesive composition.

Therefore, the present disclosure is directed to providing an adhesive composition that ensures the desired adhesion without the use of resorcin and does not compromise workability during use, as well as an organic fiber material, a rubber article, an organic fiber-rubber composite, and a tire comprising the same.

### (Solution to Problem)

The present inventor has conducted extensive research on the formulations of adhesive compositions to solve the above-described problems. As a result, the present inventor has discovered that an adhesive composition that ensures the desired adhesion without the use of resorcin and does not compromise workability during use is obtained by combining a certain rubber latex with a compound containing an amide group and an amino group, along with an aqueous compound having a (thermally dissociable blocked) isocyanate group. Based on this discovery, the present disclosure was completed.

Specifically, the gists of an adhesive composition, an organic fiber material, a rubber article, an organic fiber-rubber composite, and a tire of the present disclosure are as follows.
[1] An adhesive composition comprising:
   (A) a rubber latex containing an unsaturated diene;
   (B) a compound containing an amide group and an amino group in a single molecule; and
   (C) an aqueous compound having a (thermally dissociable blocked) isocyanate group.
[2] The adhesive composition according to [1], further comprising one or more components selected from the group consisting of the following (D) to (E):
   (D) an aqueous component having a plurality of phenolic hydroxyl groups in a molecule, and
   (E) a polyvalent metal salt.
[3] The adhesive composition according to [1] or [2], wherein the (A) rubber latex containing an unsaturated diene comprises at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), and vinylpyridine-styrene-butadiene copolymer rubber (Vp).
[4] The adhesive composition according to any one of [1] to [3], wherein the (B) compound containing an amide group and an amino group in the single molecule is (B-1) an amide condensate of a polyamine and a polyvalent fatty acid, or (B-2) an epoxy adduct of an amide condensate of a polyamine and a polyvalent fatty acid.
[5] The adhesive composition according to any one of [1] to [4], wherein the (B) compound containing an amide group and an amino group in the single molecule is a compound obtained by condensing a dimer acid derived from an unsaturated fatty acid with a polyamine.
[6] The adhesive composition according to any one of [1] to [5], wherein the (B) compound containing an amide group and an amino group in the single molecule is a compound obtained by condensing a dimer acid derived from a tall oil fatty acid with a polyamine.
[7] The adhesive composition according to any one of [1] to [6], wherein the (C) aqueous compound having a (thermally dissociable blocked) isocyanate group is (C-1) a water-dispersible (thermally dissociable blocked) isocyanate compound comprising an adduct of a polyisocyanate having an aromatic ring and a blocking agent having one or more active hydrogen groups.
[8] The adhesive composition according to [7], wherein the (C-1) water-dispersible (thermally dissociable blocked) isocyanate compound comprising an adduct of a polyisocyanate having an aromatic ring and a blocking agent having one or more active hydrogen groups is a blocked methylene diphenyl diisocyanate.
[9] The adhesive composition according to any one of [1] to [6], wherein the (C) aqueous compound having a (thermally dissociable blocked) isocyanate group is (C-2) an aqueous urethane compound having a (thermally dissociable blocked) isocyanate group.
[10] The adhesive composition according to [9],
   wherein the (C-2) aqueous urethane compound having a (thermally dissociable blocked) isocyanate group is a reaction product obtained after mixing
   (α) an organic polyisocyanate compound with 3 or more and 5 or fewer functional groups and having a number average molecular weight of 2,000 or less;
   (β) a compound with 2 or more and 4 or less active hydrogen groups and having a number average molecular weight of 5,000 or less;
   (γ) a thermally dissociable blocking agent; and
   (δ) a compound with at least one active hydrogen group and at least one hydrophilic group that is anionic, cationic, or nonionic,
   so that a mixing ratio of each component relative to a total amount of (α), (β), (γ), and (δ) is
   40 mass% or more and 85 mass% or less for (α),
   5 mass% or more and 35 mass% or less for (β),
   5 mass% or more and 35 mass% or less for (γ),
   5 mass% or more and 35 mass% or less for (δ), and
   carrying out a reaction, and
   a constituting ratio of the (thermally dissociable blocked) isocyanate group in the reaction product is 0.5 mass% or more and 11 mass% or less when a molecular weight of an isocyanate group (-NCO) is taken as 42.
[11] The adhesive composition according to [9] or [10],
   wherein the (C-2) aqueous urethane compound having a (thermally dissociable blocked) isocyanate group is represented by the following general formula (1): 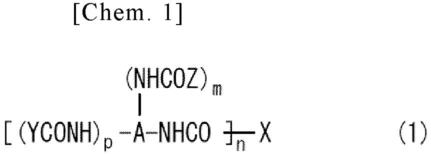 in the formula (1),
   A represents a residue of an organic polyisocyanate compound, after active hydrogen atoms have been eliminated,
   X represents a residue of a polyol compound with 2 or more and 4 or fewer hydroxyl groups and a number average molecular weight of 5,000 or less, after the active hydrogen atoms have been eliminated,
   Y represents a residue of a thermally dissociable blocking agent, after the active hydrogen atoms have been eliminated,
   Z represents a residue of a compound having at least one active hydrogen atom and at least one group forming a salt or a hydrophilic polyether chain, after the active hydrogen atoms have been eliminated,
   n represents an integer of 2 or more and 4 or less,
   p+m represents an integer of 2 or more and 4 or less, where m ≥ 0.25.
[12] The adhesive composition according to any one of [2] to [11], wherein the (D) aqueous component having the plurality of phenolic hydroxyl groups in the molecule is a plant-derived component having a plurality of phenolic hydroxyl groups in a molecule.
[13] The adhesive composition according to [12], wherein the (D) aqueous component having the plurality of phenolic hydroxyl groups in the molecule is a polyphenol such as lignin, tannin, tannic acid, flavonoid, or derivatives thereof.
[14] The adhesive composition according to [13], wherein the (D) aqueous component having the plurality of phenolic hydroxyl groups in the molecule is a derivative of lignin sulfonic acid.
[15] The adhesive composition according to any one of [2] to [14], wherein the (E) polyvalent metal salt is a salt of a metal ion with a valency of 2 or higher.
[16] The adhesive composition according to any one of [2] to [15], wherein the (E) polyvalent metal salt is water-soluble and is capable of becoming a 4-coordinated or 6-coordinated polyvalent metal ion.
[17] The adhesive composition according to any one of [2] to [16], wherein the (E) polyvalent metal salt is a metal salt containing copper.
[18] The adhesive composition according to any one of [1] to [17], being free of resorcin.
[19] The adhesive composition according to any one of [1] to [18], for adhesion to a rubber.
[20] The adhesive composition according to any one of [1] to [19], for adhesion to an organic fiber.
[21] The adhesive composition according to any one of [1] to [20], for adhesion of a rubber and an organic fiber.
[22] An organic fiber material comprising an organic fiber and an adhesive layer coating a surface of the organic fiber,
   the adhesive layer being made of the adhesive composition according to any one of [1] to [21].
[23] The organic fiber material according to [22], wherein the organic fiber is an organic fiber cord formed by twisting a plurality of filaments together.
[24] The organic fiber cord according to [23], wherein the organic fiber cord is formed by applying a lower twist and an upper twist (i.e., the organic fiber cord is preferably a cord composed of a plurality of filaments twisted together, and the cord obtained by twisting a plurality of filaments has upper twists and lower twists), a fineness of the twisted cord is 100 dtex to 5,000 dtex, a twist number for the lower twist is 10 to 50 twists/10 cm, and a twist number for the upper twist is 10 to 50 twists/10 cm.
[25] The organic fiber material according to any one of [22] to [24], wherein a dry mass of the adhesive layer is 0.5 to 6.0 mass% of a mass of the organic fiber cord.
[26] The organic fiber material according to any one of [22] to [25], wherein the organic fiber is made of nylon resin.
[27] A rubber article reinforced with the organic fiber material according to any one of [22] to [26].
[28] An organic fiber-rubber composite being a composite of an organic fiber and rubber, the organic fiber being coated with the adhesive composition according to any one of [1] to [21].
[29] A tire comprising the organic fiber-rubber composite according to [28].

### (Advantageous Effect)

According to the present disclosure, it is possible to provide an adhesive composition that ensures the desired adhesion without the use of resorcin and does not compromise workability during use, as well as an organic fiber material, a rubber articles, an organic fiber-rubber composite, and a tire comprising the same.

### BRIEF DESCRIPTION OF THE DRAWINGS

In the accompanying drawings:
FIG. 1 is a schematic diagram illustrating one example of the process of coating organic fiber cord with an adhesive composition through a dipping process; and
FIG. 2 is a schematic cross-sectional diagram illustrating one example of an organic fiber-rubber composite of the present disclosure.

### DETAILED DESCRIPTION

Hereinafter, an adhesive composition, an organic fiber material, a rubber article, an organic fiber-rubber composite, and a tire of the present disclosure are illustrated and described in detail based on embodiments thereof. These descriptions are intended for illustration and are not in any way limiting the present disclosure.

In this specification, unless otherwise specified, the ends of a range are also considered to be included within the range.

### [Adhesive Composition]

An adhesive composition of the present disclosure comprises (A) a rubber latex containing an unsaturated diene; (B) a compound containing an amide group and an amino group in a single molecule; and (C) an aqueous compound having a (thermally dissociable blocked) isocyanate group.

According to the adhesive composition of the present disclosure, the above configuration enables obtaining excellent adhesion without the use of resorcin. In particular, good adhesion between an organic fiber and the covering rubber composition is ensured. In the adhesive composition of the present disclosure, the (A) rubber latex containing an unsaturated diene improves the adhesion between the adhesive composition and the bonded rubber, thereby contributing to enhanced adhesion. Furthermore, by combining the (B) compound containing an amide group and an amino group in the single molecule and the (C) an aqueous compound having a (thermally dissociable blocked) isocyanate group, the adhesion of the rubber latex, measured as the mechanical stability under the shear strain of the adhesive liquid, can be suppressed. This suppression allows, particularly in the process of coating organic fibers with the adhesive composition followed by drying and thermal-curing them, the adhesion of the adhesive composition to rolls and the like to be reduced, resulting in improved workability.

Furthermore, since the (B) compound containing an amide group and an amino group in the single molecule stabilizes the dispersion state of the (A) rubber latex containing an unsaturated diene, the adhesive composition of the present disclosure also exhibits good pot life.

Thus, according to the adhesive composition of the present disclosure, the desired adhesion can be obtained without the use of resorcin, and good workability during use can also be ensured.

Moreover, since the use of resorcin is not required, the adhesive composition of the present disclosure reduces environmental impact. Therefore, the adhesive composition of the present disclosure can be made resorcin-free.

Preferably, the adhesive composition of the present disclosure is also free of formaldehyde. In this case, the environmental impact can be further reduced.

Furthermore, the adhesive composition of the present disclosure preferably includes one or more additional components selected from (D) an aqueous component having a plurality of phenolic hydroxyl groups in a molecule; and (E) a polyvalent metal salt. In this case, excellent adhesion and mechanical stability can be achieved even in the absence of formaldehyde and resorcin.

Due to high adhesion to a rubber, the adhesive composition of the present disclosure is particularly preferred as an adhesive composition for adhesion to a rubber. In addition, due to high adhesion to organic fibers, the adhesive composition of the present disclosure is preferred as an adhesive composition for adhesion to organic fibers. Moreover, due to high adhesion to both rubber and organic fibers, the adhesive composition of the present disclosure is preferred as an adhesive composition for adhesion of a rubber and organic fibers together. Particularly, the adhesive composition of the present disclosure is useful when applied to an organic fiber cord, as described later.

### <(A) Rubber Latex Containing Unsaturated Diene>

In the adhesive composition of the present disclosure, the rubber latex containing an unsaturated diene includes synthetic rubber latex containing an unsaturated diene and natural rubber latex.

A synthetic rubber latex containing an unsaturated diene in the adhesive composition of the present disclosure refers to a synthetic rubber latex containing an unsaturated diene capable of being vulcanized with sulfur.

In one embodiment of the present disclosure, the (A) rubber latex containing an unsaturated diene included in the adhesive composition is a component for bonding an adhesive layer of the adhesive composition to the covering rubber composition, which is the adherend, similarly to rubber glue described above. The (A) rubber latex containing an unsaturated diene is compatible with the rubber polymer contained in the covering rubber composition, which is the adherend, and the unsaturated diene moiety further forms a co-vulcanized rubber bonding through the co-vulcanization. As a result, the adhesive composition of the present disclosure that contains the (A) rubber latex containing an unsaturated diene can achieve good adhesion between an organic fiber cord and the covering rubber composition, for example.

The (A) rubber latex containing an unsaturated diene is not particularly limited but examples specifically include natural rubber (NR) latex, or synthetic rubber latex, such as latexes of isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), and vinylpyridine-styrene-butadiene copolymer rubber (Vp). These may be used alone or in combination of two or more. When the (A) rubber latex containing an unsaturated diene includes at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), and vinylpyridine-styrene-butadiene copolymer rubber (Vp), the adhesion between an organic fiber and the covering rubber composition is improved when the adhesive composition is used for organic fibers.

Among these, a latex of vinylpyridine-styrene-butadiene copolymer rubber is particularly preferred. The vinylpyridine-styrene-butadiene copolymer rubber latex has traditionally been widely used in adhesive compositions and articles such as tires. In the adhesive composition of the present disclosure, it provides excellent bonding between the adhesive layer and the rubber to be bonded, and the advantages of being relatively flexible and resilient contributes to enhanced fracture resistance due to the strain relaxation provided by the rubber elasticity of the adhesive layer, and it allows for deformation of the organic fiber cord.

The content of the (A) rubber latex containing an unsaturated diene in the total solid content of the adhesive composition of the present disclosure is not particularly limited but is preferably 25 mass% or more, more preferably 40 mass% or more, and even more preferably 50 mass% or more. Furthermore, the content of the (A) rubber latex containing an unsaturated diene is preferably 95 mass% or less, more preferably 90 mass% or less, and even more preferably 85 mass% or less. When the content of the (A) rubber latex containing an unsaturated diene is 50 mass% or more, the compatibility between the rubber polymers in the covering rubber composition and the rubber latex included in the adhesive composition becomes more appropriate, leading to further excellent adhesion of the coated rubber in the organic fiber-rubber composite. On the other hand, when the content of the (A) rubber latex containing an unsaturated diene is 95 mass% or less, the amount of the coating component that suppresses the adhesion of the latex, which is included as another component in the adhesive composition, can be maintained at a relatively constant level or higher. This allows for the achievement of mechanical stability under shear strain of the adhesive liquid, and the adhesion of the adhesive composition to the apparatus as illustrated in FIG. 1 is suppressed in the process of coating the fiber material to be coated with the adhesive composition. Furthermore, by reducing the occurrence of the issue where the surface of the coated adhesive composition becomes rough, which could lead to a decrease in adhesion with the covering rubber composition, the adhesion can be improved.

The (A) rubber latex containing an unsaturated diene can be obtained, for example, by dissolving an emulsifier such as potassium rosinate in water, adding a mixture of monomers to it, and further adding an electrolyte such as sodium phosphate and a peroxide, etc., as a polymerization initiator to start the polymerization. After reaching a predetermined conversion rate, a charge transfer agent is added to stop the polymerization, and then the residual monomers are removed. Additionally, it is preferable to use a chain transfer agent for polymerization.

The emulsifier is used for emulsifying the mixture of monomers in an aqueous system, and one or more of anionic surfactants such as alkali metal salts of fatty acids, alkali metal salts of rosin acid, formaldehyde-condensed sodium naphthalene sulfonate, sulfate esters of higher alcohols, alkylbenzenesulfonates, and aliphatic sulfonates, or nonionic surfactants such as alkyl ester type, alkyl ether type, alkylphenyl ether type of polyethylene glycol are used.

Among these emulsifiers, it is preferable to include a metal salt of rosin acid, particularly an alkali metal salt of rosin acid, which can be used either alone, i.e., as a single type, or in combination with other emulsifiers in a two-component or more mixture.

Rosin acid is a mixture of resin acids with similar chemical structures, with tricyclic diterpenes obtained from materials such as pine resin being the main components. These resin acids have three ring structures, two double bonds, and one carboxyl group. The double bond moiety contains highly reactive functional groups that can undergo reactions such as esterification with unsaturated carboxylic acids or the methylol terminal of resole-type phenolic resins at the carboxyl group moiety.

The amount of such emulsifiers used is typically 0.1 to 8 parts by mass, preferably 1 to 5 parts by mass, per 100 parts by mass of the total monomers used in latex polymerization.

Examples of the polymerization initiator used include, for example, water-soluble initiators such as potassium persulfate, sodium persulfate, and ammonium persulfate, redox-type initiators, or oil-soluble initiators such as benzoyl peroxide. Among these, potassium persulfate is preferably used.

Examples of the chain transfer agent include, for example, monofunctional alkyl mercaptans such as n-hexylmercaptan, t-dodecylmercaptan, n-dodecylmercaptan, n-octylmercaptan, n-tetradecylmercaptan, and t-hexylmercaptan; bifunctional mercaptans such as 1,10-decanedithiol and ethylene glycol dithioglycolate; trifunctional mercaptans such as 1,5,10-canditrithiol and trimethylolpropane tristhioglycolate; tetrafunctional mercaptans such as pentaerythritol tetrakisthioglycolate; disulfides; halogenated compounds such as carbon tetrachloride, carbon tetrabromide, and ethylene bromide; and α-methylstyrene dimer, terpinolene, α-terpinene, dipentene, and allyl alcohol. These can be used alone or in combinations of two or more types.

Among these chain transfer agents, alkyl mercaptans are preferred, and n-octylmercaptan and t-dodecylmercaptan are more preferred. Among these, t-dodecylmercaptan is preferably used.

The amount of such chain transfer agents used is typically 0.01 to 5 parts by mass, preferably 0.1 to 3 parts by mass, per 100 parts by mass of the total monomers used in latex polymerization.

Additionally, other than the above-described components, generally used additives may be used in the latex, such as antioxidants such as hindered phenols, silicone-based, higher alcohol-based, and mineral oil-based defoamers, reaction terminators, and antifreeze agents, as necessary.

It shall be noted that the components (B) to (E) of the present disclosure may be added in advance to the latex. In such cases, they shall be included in the composition comprising (A) to (E) in the adhesive composition of the present disclosure.

### <<Vinylpyridine-Styrene-Butadiene Copolymer Rubber Latex>>

The vinylpyridine-styrene-butadiene copolymer rubber latex is obtained through ternary copolymerization of a vinylpyridine-based monomer, a styrene-based monomer, and a conjugated diene-based butadiene monomer, and may further include other copolymerizable monomers.

Here, the vinylpyridine-based monomer encompasses vinylpyridine and substituted vinylpyridines in which the hydrogen atoms in the vinylpyridine are replaced by substituent groups. Examples of such vinylpyridine-based monomers include 2-vinylpyridine, 3-vinylpyridine, 4-vinylpyridine, 2-methyl-5-vinylpyridine, and 5-ethyl-2-vinylpyridine. Among these, 2-vinylpyridine is preferred. These vinylpyridine-based monomers may be used alone or in combination with two or more types.

The styrene-based monomer encompasses styrene and substituted styrenes in which the hydrogen atoms in the styrene are replaced by substituent groups. Examples of such styrene-based monomers include styrene, α-methylstyrene, 2-methylstyrene, 3-methylstyrene, 4-methylstyrene, 2,4-diisopropylstyrene, 2,4-dimethylstyrene, 4-t-butylstyrene, and hydroxymethylstyrene. Among these, styrene is preferred. These styrene-based monomers may be used alone or in combination with two or more types.

Examples of the conjugated diene-based butadiene monomer include aliphatic conjugated butadiene compounds such as 1,3-butadiene and 2-methyl-1,3-butadiene. Among these, 1,3-butadiene is preferred. These conjugated diene-based butadiene monomers may be used alone or in combination with two or more types.

The vinylpyridine-styrene-butadiene copolymer rubber latex can be synthesized by using known methods, and specifically, the method disclosed in JP H9-78045 A by the present inventor and et al., can be used, for example. By utilizing these methods, it is possible to produce vinylpyridine-styrene-butadiene copolymer rubber latexes with various compositions and particle structures, such as copolymers with uniform or different composition ratios in the same particle.

As for the vinylpyridine-styrene-butadiene copolymer rubber latex, examples of commercially available copolymers with a uniform monomer composition ratio in the same particle include Nipol 2518 manufactured by Zeon Corporation and Pyratex manufactured by Nippon A&L Inc. Additionally, examples of commercially available copolymers with differing monomer composition ratios in the same particle include V0658 manufactured by JSR Corporation. All of these can be used as the (A) rubber latex containing an unsaturated diene in the adhesive composition of the present disclosure.

In the vinylpyridine-styrene-butadiene copolymer rubber latex, the monomer ratio of vinylpyridine: styrene: butadiene is not particularly limited. However, it is preferable that the copolymer constituting the vinylpyridine-styrene-butadiene copolymer particles includes a copolymer obtained by polymerizing a monomer mixture containing 5 to 20 mass% of vinylpyridine, 10 to 40 mass% of styrene, and 45 to 75 mass% of butadiene. When the vinylpyridine content is 5 mass% or more, the amount of the pyridine sites that have a vulcanization-accelerating effect in the rubber component becomes appropriate, increasing the crosslinking density through sulfur and further improving the adhesive strength of the entire adhesive layer. On the other hand, when the vinylpyridine content is 20 mass% or less, over-vulcanization of the crosslinking density of the rubber is avoided, allowing the adhesive to maintain a desirable hardness. Additionally, when the styrene content is 10 mass% or more, sufficient strengths of the latex particles and the adhesive layer are ensured, which further improves the adhesive strength. Conversely, when the styrene content is 40 mass% or less, appropriate co-vulcanization between the adhesive layer and the rubber to be adhered is maintained while still ensuring adhesive strength. Furthermore, when the butadiene content is 45 mass% or more, sufficient crosslinking can be formed, and when it is 75 mass% or less, more appropriate crosslinking can be maintained, ensuring good durability due to changes in volume and modulus. A preferred ratio of vinylpyridine: styrene: butadiene in the monomer mixture is, for example, 15: 15: 70.

In the present disclosure, as the (A) rubber latex containing an unsaturated diene, natural rubber latex can also be used, in addition to synthetic rubber latex containing an unsaturated diene. The natural rubber latex is not particularly limited, and examples include field latex, ammonia-treated latex, centrifugally concentrated latex, deproteinized latex treated with surfactants or enzymes, and mixtures of these. Among these, field latex is preferred.

### <(B) Compound Containing Amide Group and Amino Group in Single Molecule>

The adhesive composition of the present disclosure contains (B) a compound containing an amide group and an amino group in a single molecule. The (B) compound containing an amide group and an amino group in the single molecule has the effect of improving the pot life and mechanical stability of the adhesive composition. Additionally, when the adhesive composition is coated onto an organic fiber cord, it functions to improve the heat-resistant adhesive strength between the rubber and the organic fiber cord.

The numbers of amide groups and amino groups in a single molecule are not particularly limited and may independently be one or more.

The (B) compound containing an amide group and an amino group in the single molecule preferably further includes hydrophilic sites other than the amide group and the amino group. Examples of such hydrophilic sites include carboxyl groups, hydroxyl groups, etc. Having these hydrophilic sites improves the stability (solubility/dispersion) of the (B) compound containing an amide group and an amino group in the single molecule in the water solution of the adhesive composition.

As a specific example of the (B) compound containing an amide group and an amino group in the single molecule, polyamideamine, etc., can be mentioned. The polyamideamine can be produced, for example, by dehydration condensation of an amine compound, such as an aliphatic amine, alicyclic amine, aromatic amine, aromatic aliphatic amine, or heterocyclic amine, with a carboxylic acid such as a dimer acid. Furthermore, when the polyamideamine is a polyamide polyamine having two or more amine groups, the stability (solubility/dispersion) of the adhesive composition in a water solution is improved.

The amine value of the (B) compound containing an amide group and an amino group in the single molecule is preferably 30 to 400.

Specifically, the (B) compound containing an amide group and an amino group in the single molecule is preferably (B-1) an amide condensate containing a polyamine and a polyvalent fatty acid, or (B-2) an epoxy adduct of an amide condensate containing a polyamine and a polyvalent fatty acid. When the (B) compound containing an amide group and an amino group in the single molecule is (B-1) an amide condensate of a polyamine and a polyvalent fatty acid, or (B-2) an epoxy adduct of an amide condensate of a polyamine and a polyvalent fatty acid, the adhesion between an organic fiber and the covering rubber composition is further improved when the adhesive composition is used for the organic fiber.

Moreover, the (B) compound containing an amide group and an amino group in the single molecule is preferably a compound obtained by condensation of a dimer acid derived from an unsaturated fatty acid with a polyamine. When the (B) compound containing an amide group and an amino group in the single molecule is a compound obtained by condensation of a dimer acid derived from an unsaturated fatty acid with a polyamine, the adhesion between an organic fiber and the covering rubber composition is further improved when the adhesive composition is used for the organic fiber.

Additionally, the (B) compound containing an amide group and an amino group in the single molecule is preferably a compound obtained by condensation of a dimer acid derived from a tall oil fatty acid with a polyamine. When the (B) compound containing an amide group and an amino group in the single molecule is a compound obtained by condensation of a dimer acid derived from a tall oil fatty acid with a polyamine, the adhesion between the organic fiber and the covering rubber composition is even more improved when the adhesive composition is used for organic fibers.

Examples of the aliphatic amines include alkylene polyamines, polyalkylene polyamines, and alkylaminoalkylamines.

Examples of the alkylene polyamines include, for example, methylenediamine, ethylenediamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, and trimethylhexamethylenediamine.

Examples of the polyalkylene polyamines include, for example, diethylenetriamine, dipropylenetriamine, triethylenetetramine, tripropylenetetramine, tetraethylenepentamine, tetrapropylenepentamine, pentaethylenehexamine, nonaethylene decamine, and bis(hexamethylene)triamine.

Furthermore, examples of other aliphatic amines include, for example, tetra(aminomethyl)methane, tetrakis(2-aminoethylaminomethyl)methane, 1,3-bis(2'-aminoethylamino)propane, 2,2'-[ethylene bis(imino trimethylene imino)]bis(ethanamine), tris(2-aminoethyl)amine, bis(cyanoethyl)diethylenetriamine, and polyoxyalkylene polyamines.

Examples of the cyclic amines include 1,3-bisaminomethylcyclohexane, 1,4-cyclohexanediamine, 4,4'-methylene bis(cyclohexanamine), 4,4'-isopropylidene bis(cyclohexanamine), norbornanediamine, and isophoronediamine.

Examples of the aromatic amines include phenylendiamine, naphthylenediamine, diamino diphenylmethane, 2,2-bis(4-aminophenyl)propane, 4,4'-diamino diphenyl ether, 4,4'-diamino benzophenone, 4,4'-diamino diphenyl sulfone, 4,4'-diamino-3,3'-dimethyl diphenylmethane, 2,4'-diamino biphenyl, 2,3'-dimethyl-4,4'-diamino biphenyl, and 3,3'-dimethoxy-4,4'-diamino biphenyl.

Examples of the aromatic aliphatic amines include o-xylilendiamine, m-xylilendiamine, p-xylilendiamine, bis(aminomethyl)naphthalene, and bis(aminoethyl)naphthalene.

Examples of the heterocyclic amines include N-methylpiperazine, morpholine, 1,4-bis-(3-aminopropyl)piperazine, 1,4-diazaspiroheptane, 1-(2'-aminoethyl)piperazine, 1-[2'-(2"-aminoethylamino)ethyl]piperazine, 1,11-diazacyclo eicosane, and 1,15-diazacyclo octacosane.

Additionally, the dimer acid is a dimer of an unsaturated fatty acid and typically contains small amounts of monomers or trimers. The unsaturated fatty acids are preferably carboxylic acids that have 12 to 24 carbons, more preferably 16 to 18 carbons, and contain one or more unsaturated bonds in a single molecule. Examples of such unsaturated fatty acids include, for example, fatty acids with one unsaturated bond such as oleic acid, elaidic acid, and cetoleic acid; fatty acids with two unsaturated bonds such as sorbic acid and linoleic acid; and fatty acids with three or more unsaturated bonds such as linolenic acid and arachidonic acid. Fatty acids obtained from animal or plant sources can also be used, and examples include, for example, soybean oil fatty acids, tall oil fatty acids, and linseed oil fatty acids.

The (B) compound containing an amide group and an amino group in the single molecule is preferably a compound with a weight average molecular weight (Mw) of 500 to 10,000, more preferably 900 to 2,500. In this case, the effect of improving the pot life and mechanical stability of the adhesive composition is increased, and additionally, coating the adhesive composition onto an organic fiber cord enhances the heat-resistant adhesive strength between the rubber and the organic fiber cord. In this specification, the weight average molecular weight is the polystyrene-equivalent value measured by gel permeation chromatography (GPC).

If the (B) compound containing an amide group and an amino group in the single molecule is (B-1) an amide condensate of a polyamine and a polyvalent fatty acid, Tohmide 296 (amine value: 425, brown liquid) manufactured by T&K TOKA Corporation can be preferably used, which is a polyamideamine obtained by condensing an amine such as diethylenetriamine and a dimer acid derived from a tall oil fatty acid at a ratio of approximately 2:1.

When the (B) compound containing an amide group and an amino group in the single molecule is (B-2) an epoxy adduct of an amide condensate of a polyamine and a polyvalent fatty acid, an amine-epoxy adduct formed by adding an epoxy to (B-1) an amide condensate containing a polyamine and a polyvalent fatty acid is preferably used.

In the (B-2) epoxy adduct of an amide condensate containing a polyamine and a polyvalent fatty acid, the preferred epoxy compound to be added is preferably a polyepoxy compound (alicyclic epoxy compound) that contains two or more alicyclic epoxy groups in the molecule. In this specification, "alicyclic epoxy group" refers to an epoxy group constituted by two adjacent carbon atoms that form a cycloaliphatic (alicyclic ring) and an oxygen atom. Examples include, for example, multifunctional epoxy resins such as bisphenol A-type epoxy resin, bisphenol F-type epoxy resin, epoxy novolac resin, alicyclic epoxy resins, multifunctional epoxy resins, and brominated epoxy resins.

The epoxy compound to be added to the (B-2) epoxy adduct of an amide condensate containing a polyamine and a polyvalent fatty acid is preferably a hydrophobic liquid epoxy resin, which is not particularly limited as long as it reacts the amide condensate containing a polyamine and a polyvalent fatty acid at room temperature and cures. Specifically, alicyclic epoxy resins such as bisphenol A-type epoxy resin, bisphenol F-type epoxy resin, alkyl monoglycidyl ether, alkyl monoglycidyl ester, alkyl diglycidyl ether, alkyl diglycidyl ester, alkylphenol monoglycidyl ether, polyglycol monoglycidyl ether, and polyglycol diglycidyl ether can be used. However, by performing beforehand an addition reaction with an amide condensate containing a water-soluble polyamine and a polyvalent fatty acid to form a water-soluble adduct, it becomes possible to obtain a water-soluble compound.

In the present disclosure, the hydrophobic liquid epoxy resin is an epoxy resin that is hydrophobic and liquid. Here, "hydrophobic" means that the compound does not dissolve in water or does not have hydrophilic properties.

The weight average molecular weight (Mw) of the epoxy-amine adduct is not particularly limited but is preferably 200 to 40,000, more preferably 300 to 30,000, and even more preferably 400 to 20,000. By setting the weight average molecular weight to 200 or more, the glass transition temperature of the epoxy-amine adduct becomes high to some extent, which tends to suppress contamination to the processing apparatus (such as rollers). On the other hand, by setting the weight average molecular weight to 40,000 or less, the mechanical stability of the (A) rubber latex component containing an unsaturated diene tends to be improved further. The weight average molecular weight of the epoxy-amine adduct can be determined using the standard polystyrene-equivalent molecular weight measured by gel permeation chromatography (GPC).

Preferably, currently commercially available products of the epoxy compound to be added in the (B-2) epoxy adduct of an amide condensate containing a polyamine and a polyvalent fatty acid specifically include, for example, Tohmide series or Fujicure series manufactured by T&K TOKA Corporation, jER Cure manufactured by Mitsubishi Chemical Corporation, and Beckopox EH series manufactured by Cytec Industries.

The (B-2) epoxy adduct of an amide condensate containing a polyamine and a polyvalent fatty acid is, for example, preferably an adduct of a polyamideamine obtained by condensing triethylenetetramine and a dimer acid derived from tall oil fatty acid with bisphenol A diglycidyl ether. Specifically, Tohmide TXS-53-C (amine value: 195 to 215, yellow-brown liquid) manufactured by T&K TOKA Corporation can be preferably used.

The (B-2) epoxy adduct of an amide condensate containing a polyamine and a polyvalent fatty acid is preferred because the addition of an epoxy compound improves the strength of the coating layer of the adhesive composition, thus enhancing the adhesive strength of the adhesive composition.

The content of the (B) compound containing an amide group and an amino group in the single molecule in the adhesive composition is preferably in the range of 0.1 to 20 mass%, and more preferably in the range of 0.4 to 15 mass%, based on the solid content. When the content is within this content, the effect of the (B) compound containing an amide group and an amino group in the single molecule becomes more significant.

### <(C) Aqueous Compound Having (Thermally Dissociable Blocked) Isocyanate Group>

The adhesive composition of the present disclosure contains (C) an aqueous compound having a (thermally dissociable blocked) isocyanate group. By including the (C) aqueous compound having a (thermally dissociable blocked) isocyanate group, the adhesive composition of the present disclosure can achieve excellent adhesion and mechanical stability even in the absence of formaldehyde and resorcin.

The (thermally dissociable blocked) isocyanate group in the (C) aqueous compound having a (thermally dissociable blocked) isocyanate group refers to a thermally dissociable blocked isocyanate group or an isocyanate group.

Specifically, the (thermally dissociable blocked) isocyanate group includes: (i) a thermally dissociable blocked isocyanate group formed by the reaction of an isocyanate group with a thermally dissociable blocking agent with that isocyanate group; (ii) an isocyanate group in which a thermally dissociable blocking agent is not reacted with that isocyanate group; (iii) an isocyanate group generated by the dissociation of a thermally dissociable blocking agent from a thermally dissociable blocked isocyanate group; and (iv) an isocyanate group.

The aqueous nature of the (C) aqueous compound having a (thermally dissociable blocked) isocyanate group indicates that it is water-soluble or water-dispersible. Additionally, water-soluble does not necessarily mean complete solubility in water, but can also refer to partial solubility or the absence of phase separation in a water solution of the adhesive composition.

The (C) aqueous compound having a (thermally dissociable blocked) isocyanate group is preferably (C-1) a water-dispersible (thermally dissociable blocked) isocyanate compound comprising an adduct of a polyisocyanate having an aromatic ring and a blocking agent having one or more active hydrogen groups (hereinafter referred to as the "(C-1) component"). In this case, the adhesion between an organic fiber and the covering rubber composition is further improved when the adhesive composition is used for the organic fiber.

Here, with regard to the component (C-1), the active hydrogen group refers to a group containing hydrogen that becomes active hydrogen (atomic hydrogen (hydrogen radical) and hydride ion (hydride)) when placed under appropriate conditions. Examples of the active hydrogen group include amino groups and hydroxyl groups.

The thermally dissociable blocking agent is not particularly limited as long as it is a blocking agent compound that allows the dissociation of the blocking agent by heat treatment, when necessary, restoring the isocyanate group, while protecting the isocyanate group from arbitrary chemical reactions. Specifically, in the process illustrated in FIG. 1, it is preferable that the thermal dissociation temperature is such that the crosslinking reactivity of the isocyanate group, which has been blocked by the thermal dissociable blocking agent to suppress the reactivity, can be recovered at the heating treatment temperature during thermal curing, after applying the adhesive treatment liquid and drying.

Examples of the blocking agent include alcohols, phenols, active methylene compounds, oximes, lactams, and amines, and are not particularly limited. Specific examples include lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorophenol, amylphenol; oximes such as methyl ethyl ketoxime, acetoxime, acetophenone oxime, benzophenone oxime, cyclohexanone oxime; alcohols such as methanol, ethanol, butanol, isopropyl alcohol, butyl alcohol, cyclohexanol; dialkyl esters of malonic acid such as dimethyl malonate, diethyl malonate; active methylene compounds such as methyl acetoacetate, ethyl acetoacetate, acetylacetone; mercaptans such as butyl mercaptan, dodecyl mercaptan; amides such as acetanilide, acetamide; imides such as succinimide, phthalimide, maleimide; sulfite compounds such as sodium metabisulfite; cellosolves such as methyl cellosolve, ethyl cellosolve, and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. Mixtures of two or more of these may also be used.

Among these blocking agents, phenols, ε-caprolactam, and ketooximes are preferably used, because thermal curing of the adhesive composition by thermal dissociation tends to be more stably achieved.

Additionally, examples of the (C-1) component specifically include aromatic polyisocyanates or aromatic-aliphatic polyisocyanates. Examples of aromatic isocyanates include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyldiphenylmethane diisocyanates, and tetraalkyldiphenylmethane diisocyanates; polymethylene polyphenyl polyisocyanate (polymeric MDI); m- or p-isocyanatophenylsulfonyl isocyanates; diisocyanatobiphenyls such as 4,4'-diisocyanatobiphenyl and 3,3'-dimethyl-4,4'-diisocyanatobiphenyl; and naphthylene diisocyanates such as 1,5-naphthylene diisocyanate. Examples of aromatic aliphatic polyisocyanates include xylene diisocyanates such as m-xylene diisocyanate, p-xylene diisocyanate (XDI), and tetramethyl xylene diisocyanate; diethylbenzene diisocyanate; and α,α,α,α-tetramethylxylene diisocyanate (TMXDI). Modified products of the above polyisocyanates, such as carbodiimide, polyols, and allophanates can be mentioned.

Among the polyisocyanates that contain these aromatic rings in the molecule, from the perspective of the code convergence of the adhesive composition, aromatic isocyanates are preferred, and tolylene diisocyanates (TDI), diphenylmethane diisocyanates (MDI), or polymethylene polyphenyl polyisocyanates (polymeric MDI) are more preferred, and diphenylmethane diisocyanates (MDI) are most preferred. As the (C-1) component, using blocked methylene diphenyl isocyanates, particularly a blocked methylene diphenyl diisocyanate (also referred to as "diphenylmethane diisocyanate"), enhances the adhesion between the organic fiber and a covering rubber composition when the adhesive composition is used for the organic fiber.

Additionally, the (C) aqueous compound having a (thermally dissociable blocked) isocyanate group is preferably (C-2) an aqueous urethane compound having a (thermally dissociable blocked) isocyanate group (hereinafter simply referred to as the "(C-2) component"). In this case as well, the adhesion between an organic fiber and the covering rubber composition is further improved when the adhesive composition is used for the organic fiber. The details of the (C-2) component will be described later for the sake of convenience.

The content (solid content percentage) of the (C) aqueous compound having a (thermally dissociable blocked) isocyanate group based on the total solid content of the adhesive composition is not particularly limited, but it is preferably 5 mass% or more, more preferably 10 mass% or more, and even more preferably 18 mass% or more. Additionally, the content of the (C) aqueous compound having a (thermally dissociable blocked) isocyanate group is preferably 70 mass% or less, more preferably 60 mass% or less, and even more preferably 45 mass% or less. This is because, when the content of the (C) aqueous compound having a (thermally dissociable blocked) isocyanate group is 5 mass% or more, the adhesion between an organic fiber and the covering rubber composition is further improved. Moreover, when the content of the (C) aqueous compound having a (thermally dissociable blocked) isocyanate group is 70 mass% or less, it becomes possible to ensure that other components, such as the rubber latex, is blended in the adhesive composition to a relative certain amount or more, and, as a result, the adhesion between the organic fiber and a covering rubber composition is further improved.

Here, in conventional adhesive compositions containing resorcin and formaldehyde, a sea-island structure is formed in which rubber latex particles (represented as islands) are dispersed in a phenolic resin (represented as sea) formed by the copolymerization of resorcin and formaldehyde, providing good adhesion between the phenolic resin covering the surface of an organic fiber and the organic fiber.

In contrast, in a preferred embodiment of the adhesive composition of the present disclosure, instead of the phenolic resin formed by the copolymerization of resorcin and formaldehyde, the (C) aqueous compound having a (thermally dissociable blocked) isocyanate group functions as an adhesive promoter with the following two functional effects (x) and (y). As a result, in the adhesive composition, the (C) aqueous compound having a (thermally dissociable blocked) isocyanate group contributes to the good adhesion between the organic fibers and the covering rubber composition.

(x) The functional effect where the aqueous compound is distributed in the vicinity of the interface between the organic fiber and the adhesive layer of the adhesive composition, thereby promoting the adhesion between the organic fiber and the adhesive layer.

(y) The functional effect where a three-dimensional network structure is formed by the crosslinking of isocyanate groups in the compound having the (thermally dissociable blocked) isocyanate group in the adhesive layer of the adhesive composition, thereby reinforcing the adhesive layer.

In one embodiment of the adhesive composition of the present disclosure, one example of the principle of the two functional effects (x) and (y) as an adhesive promoter of the (C) aqueous compound having a (thermally dissociable blocked) isocyanate group is described in detail below.

### <<Functional Effect (x) as Adhesive Promoter>>

Synthetic resin materials such as 6,6-nylon and polyethylene terephthalate, generally used as organic fibers, are made of flat linear polymer chains. The surface of the polymer chains or the gaps between the polymer chains have a π-electronic atmosphere originating from the aromatic groups contained in the polymer chains.

Therefore, conventionally, for the purpose of achieving sufficient adhesive strength by allowing an adhesive composition to disperse into the gaps between the polymer chains of the organic fibers and by ensuring that the adhesive layer of the adhesive composition adheres closely to the surface of the polymer chains of the organic fibers, adhesive compositions used for organic fibers made of polyesters, etc., include a planar-structured molecule having an aromatic ring with aromatic π-electrons on the side thereof (part that readily diffuses into organic fibers) as an adhesion promoter.

In the present disclosure, in the adhesive composition that does not contain resorcin, which is an aromatic compound, it is preferred to add an adhesive promoter with a planar-structured molecule having an aromatic ring with aromatic π-electrons on the side thereof (the part that readily diffuses into organic fibers) to promote adhesion, even in the case of an adhesive composition for 6,6-nylon.

### <<Functional Effect (y) as Adhesive Promoter>>

In the adhesive layer containing the (C) component, as described above, the amide group and the amino group in the (B) compound containing an amide group and an amino group in the single molecule, and (if the adhesive composition contains (D) an aqueous component having a plurality of phenolic hydroxyl groups in a molecule described later, the amide group and the amino group in the (B) compound containing an amide group and an amino group in the single molecule and the phenolic hydroxyl groups in the (D) aqueous component having the plurality of phenolic hydroxyl groups in the molecule) form covalent bonds via isocyanate crosslinking with the isocyanate that dissociates from the blocking agent by heat treatment, thereby enhancing the adhesion of the adhesive composition.

The particle size of the (C-1) component, as mentioned earlier, is 0.01 to 0.50 µm. When the particle size of the (C-1) component is 0.50 µm or less, the smaller the particle size, the more difficult it is for the (C-1) component to precipitate in the liquid, and the dispersion in the adhesive layer is less likely to be uneven.

On the other hand, when (C-2) an aqueous urethane compound having a (thermally dissociable blocked) isocyanate group is used, its high solubility in water makes it less likely for components in the adhesive composition to precipitate in the liquid, ensuring that even after stationary storage, issues such as unevenness in components are minimized. This contributes to the stability of adhesion over time and is preferred.

### <<Thermally Dissociable Blocking Agents and Aqueous Urethane Compound>>

The thermally dissociable blocking agent in the (C-2) component is not particularly limited as long as the blocking agent compound can protect the isocyanate group from any chemical reactions and, when necessary, dissociate the blocking agent by heat treatment to restore the isocyanate group. Examples of such a thermally dissociable blocking agent include the above-mentioned blocking agents used for the (C-1) component. Preferred examples of the blocking agent include phenolic compounds such as phenol, thiophenol, chlorophenol, cresol, resorcin, p-sec-butylphenol, p-tertbutylphenol, p-sec-amylphenol, p-octylphenol, and p-nonylphenol; secondary or tertiary alcohols such as isopropyl alcohol and tert-butyl alcohol; aromatic secondary amines such as diphenylamine and xylidine; phthalic acid imides; lactams such as δ-valerolactam; caprolactams such as ε-caprolactam; dialkyl esters of malonic acid such as diethyl malonate and dimethyl malonate; active methylene compounds such as acetylacetone and alkyl ester of acetoacetic acid; oximes such as acetoxime, methyl ethyl ketoxime, and cyclohexanone oxime; basic nitrogen compounds such as 3-hydroxypyridine, 1,2-pyrazole, 3,5-dimethylpyrazole, 1,2,4-triazole, diisopropylamine, N,N'-diphenylformamidine, and acidic sodium bisulfite.

Among these blocking agents, phenol, ε-caprolactam, and ketooxime, which are likely to enable stable thermal curing of the adhesive composition through thermal dissociation during heating, are preferably used.

Here, the aqueous nature of the aqueous urethane compound means that it is water-soluble or water-dispersible. Additionally, water-soluble does not necessarily mean complete solubility in water, but can also refer to partial solubility or the absence of phase separation in a water solution of the adhesive composition.

The urethane compound in the aqueous urethane compound is a compound that has a covalent bond formed between the nitrogen of the amine and the carbon of the carbonyl group, and refers to a compound represented by the following general formula (2).

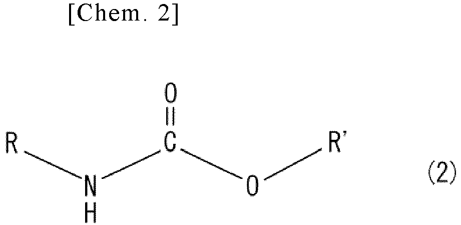

In the above formula (2), R and R' represent hydrocarbon groups.

The molecular weight of the (C-2) an aqueous urethane compound having a (thermally dissociable blocked) isocyanate group is not particularly limited as long as it can maintain the aqueous nature thereof. The number average molecular weight is preferably 1,500 to 100,000, and the number average molecular weight is particularly preferably 9,000 or less.

The method for synthesizing the (C-2) component is not particularly limited, as described above, and the (C-2) component can be synthesized by a known method, such as the method disclosed in JP S63-51474 A.

### <<Preferred Embodiment of Aqueous Urethane Compound Having (Thermally Dissociable Blocked) Isocyanate Group>>

A preferred embodiment of the (C-2) component is a reaction product obtained after mixing (α) an organic polyisocyanate compound with 3 or more and 5 or fewer functional groups and having a number average molecular weight of 2,000 or less; (β) a compound with 2 or more and 4 or less active hydrogen groups and having a number average molecular weight of 5,000 or less; (γ) a thermally dissociable blocking agent; and (δ) a compound with at least one active hydrogen group and at least one hydrophilic group that is anionic, cationic, or nonionic at a certain mixing ratio, and carrying out a reaction, wherein the constituting ratio of the (thermally dissociable blocked) isocyanate group in the reaction product is 0.5 mass% or more and 11 mass% or less when the molecular weight of an isocyanate group (-NCO) is taken as 42. Here, the mixing ratio of each component relative to the total amount of (α), (β), (γ), and (δ) is 40 mass% or more and 85 mass% or less for (α), 5 mass% or more and 35 mass% or less for (β), 5 mass% or more and 35 mass% or less for (γ), 5 mass% or more and 35 mass% or less for (δ). In this case, the adhesion between an organic fiber and the covering rubber composition is further improved when the adhesive composition is used for the organic fiber. This is because such a (C-2) component has the advantage of increasing the self-water-solubility of the urethane compound because it contains both a site with the (thermal decomposable blocked) isocyanate group and a hydrophilic site with the hydrophilic group.

The (α) organic polyisocyanate compound with 3 or more and 5 or fewer functional groups and having a number average molecular weight of 2,000 or less is not particularly limited, but is preferably an aromatic polyisocyanate compound or an oligomer thereof, or it may also be an aliphatic, alicyclic, or heterocyclic polyisocyanate compound or an oligomers thereof. This is because the (C-2) component, which is a reaction product obtained after reacting such an (α) organic polyisocyanate compound with 3 or more and 5 or fewer functional groups and having a number average molecular weight of 2,000 or less, is more readily dispersed in the gaps between the polymer chains of organic fibers.

Specifically, examples of aliphatic polyisocyanate compounds include ethylene diisocyanate, 1,4-tetramethylene diisocyanate, 1,6-hexamethylene diisocyanate, 1,12-dodecane diisocyanate, 2,2,4-trimethylhexamethylene diisocyanate, 2,4,4-trimethylhexamethylene diisocyanate, dimer acid diisocyanate, and lysine diisocyanate. Examples of alicyclic polyisocyanate compounds include cyclobutane-1,3-diisocyanate, cyclohexane-1,3-diisocyanate, cyclohexane-1,4-diisocyanate, isophorone diisocyanate, 4,4'-methylenebis(cyclohexyl isocyanate), methylcyclohexane-2,4-diisocyanate, methylcyclohexane-2,6-diisocyanate, and 1,3-(isocyanatomethyl)cyclohexane. Examples of heterocyclic polyisocyanate compounds include an adduct of 1,3,5-tris(2'-hydroxyethyl)isocyanuric acid with tolylene diisocyanate. Examples of aromatic polyisocyanate compounds include m-phenylene diisocyanate, p-phenylene diisocyanate, 2,4-tolylene diisocyanate, 2,6-tolylene diisocyanate, m-xylylene diisocyanate, p-xylylene diisocyanate, 2,4'-diphenylmethane diisocyanate, 4,4'-diphenylmethane diisocyanate, m-tetramethylxylylene diisocyanate, p-tetramethylxylylene diisocyanate, methylene tris(4-phenylisocyanate), methene tris(4-isocyanatophenyl), tris(4-isocyanatophenyl)methene, thiophosphoric acid tris(4-isocyanatophenyl ester), 3-isopropenyl-α',α'-dimethylbenzyl isocyanate, and oligomer mixtures thereof, as well as modified products of these polyisocyanate compounds, such as carbodiimides, polyols, and allophanates.

Among these, aromatic polyisocyanate compounds are preferred, and methylene diphenyl polyisocyanate, polyphenylene polymethylene polyisocyanates, and the like are particularly preferred. More particularly, polyphenylene polymethylene polyisocyanates having a number average molecular weight of 2,000 or less are preferred, and polyphenylene polymethylene polyisocyanates having a number average molecular weight of 1,000 or less are particularly preferred. This is because the (C-2) component, which is a reaction product obtained after reacting such an (α) organic polyisocyanate compound with 3 or more and 5 or fewer functional groups and having a number average molecular weight of 2,000 or less, is more readily dispersed in the gaps between the polymer chains of organic fibers.

The (β) compound with 2 to 4 active hydrogen groups and having a number average molecular weight of 5,000 or less is not particularly limited, but specific examples include compounds selected from the group consisting of the following (i) to (vii):
(i) polyhydric alcohols with 2 or more and 4 or fewer hydroxyl groups and having a number average molecular weight of 5,000 or less;
(ii) polyvalent amines with 2 or more and 4 or less primary and/or secondary amino groups and having a number average molecular weight of 5,000 or less;
(iii) amino alcohols with 2 or more and 4 or less primary and/or secondary amino groups and having a number average molecular weight of 5,000 or less and hydroxyl groups;
(iv) polyester polyols with 2 or more and 4 or fewer hydroxyl groups and having a number average molecular weight of 5,000 or less;
(v) polybutadiene polyols with 2 or more and 4 or fewer hydroxyl groups and having a number average molecular weight of 5,000 or less, and copolymers thereof with other vinyl monomers;
(vi) polychloroprene polyols with 2 or more and 4 or fewer hydroxyl groups and having a number average molecular weight of 5,000 or less, and copolymers thereof with other vinyl monomers;
(vii) polyether polyols with 2 or more and 4 or fewer hydroxyl groups and having a number average molecular weight of 5,000 or less; and
polymeric products of C2-C4 alkylene oxides with polyvalent amines, polyvalent phenols, and amino alcohols, polymeric products of C2-C4 alkylene oxides with C3 or higher polyhydric alcohols, polymeric products of C2-C4 alkylene oxides, or polymeric products of C3-C4 alkylene oxides.

Here, with regard to the (C-2) component, the active hydrogen group refers to a group that contains hydrogen capable of being an active hydrogen (atomic hydrogen (hydrogen radical) and hydride ion (hydride)) under appropriate conditions. Examples of the active hydrogen group include amino groups and hydroxyl groups.

Examples of the compound with one or more active hydrogen groups and at least one hydrophilic group that is anionic in the (δ) compound with one or more active hydrogen groups and at least one hydrophilic group that is anionic, cationic, or nonionic is not particularly limited, and examples include aminosulfonic acids such as taurine, N-methyltaurine, N-butyltaurine, and sulfanilic acid, and aminocarboxylic acids such as glycine, and alanine.

The method for synthesizing the (C-2) component by mixing and reacting the (α), (β), (γ), and (δ) components is not particularly limited, and may be a known method such as the method disclosed in JP 63-51474 A.

### <<Another Preferred Embodiment of Aqueous Urethane Compound Having (Thermally Dissociable Blocked) Isocyanate Group>>

A further preferred embodiment of the (C-2) component is a reaction product obtained after mixing (α) an organic polyisocyanate compound with 3 or more and 5 or fewer functional groups and having a number average molecular weight of 2,000 or less; (β) a compound with 2 or more and 4 or less active hydrogen groups and having a number average molecular weight of 5,000 or less; (γ) a thermally dissociable blocking agent; and (δ) a compound with at least one active hydrogen group and at least one hydrophilic group that is anionic, cationic, or nonionic; and (ε) a compound other than (α), (β), (γ), (δ), and (ε) at a certain mixing ratio, and carrying out a reaction, wherein the constituting ratio of the (thermally dissociable blocked) isocyanate group in the reaction product is 0.5 mass% or more and 11 mass% or less when the molecular weight of an isocyanate group (-NCO) is taken as 42. Here, the mixing ratio of each component relative to the total amount of (α), (β), (γ), (δ), and (ε) is 40 mass% or more and less than 85 mass% for (α), 5 mass% or more and 35 mass% or less for (β), 5 mass% or more and 35 mass% or less for (γ), 5 mass% or more and 35 mass% or less for (δ), and more than 0 mass% or more and 45 mass% or less for (ε). Such a (C-2) component has the advantage of increasing the self-water-solubility of the urethane compound because it contains both a site with the (thermal decomposable blocked) isocyanate group and a hydrophilic site with the hydrophilic group.

Here, the (α) organic polyisocyanate compound with 3 or more and 5 or fewer functional groups and a number average molecular weight of 2,000 or less, the (β) compound with 2 to 4 active hydrogen groups and a number average molecular weight of 5,000 or less, the (γ) thermally dissociable blocking agent, the (δ) compound with one or more active hydrogen groups and at least one hydrophilic group that is anionic, cationic, or nonionic are as described in the <<Preferred Embodiment of Aqueous Urethane Compound Having (Thermally Dissociable Blocked) Isocyanate Group>> section, except for the mixing ratio.

The method for synthesizing the (C-2) component by mixing and reacting the (α), (β), (γ), (δ), and (ε) components is not particularly limited, and may be a known method such as the method disclosed in JP 63-51474 A.

### <<Further Preferred Embodiment of Aqueous Urethane Compound Having (Thermally Dissociable Blocked) Isocyanate Group>>

A further preferred embodiment of the (C-2) component is represented by the following general formula (1): 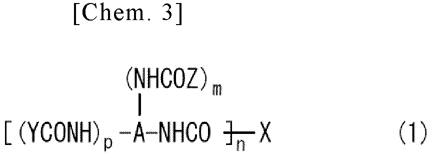 in the formula (1),
A represents a residue of an organic polyisocyanate compound, after active hydrogen atoms have been eliminated,
X represents a residue of a polyol compound with 2 or more and 4 or fewer hydroxyl groups and a number average molecular weight of 5,000 or less, after the active hydrogen atoms have been eliminated,
Y represents a residue of a thermally dissociable blocking agent, after the active hydrogen atoms have been eliminated,
Z represents a residue of a compound having at least one active hydrogen atom and at least one group forming a salt or a hydrophilic polyether chain, after the active hydrogen atoms have been eliminated,
n represents an integer of 2 or more and 4 or less,
p + m is an integer of 2 or more and 4 or less, where m ≥ 0.25.

Also in this case, the adhesion between an organic fiber and the covering rubber composition is even further improved when the adhesive composition is used for the organic fiber. This is because such a (C-2) component has the advantage of increasing the self-water-solubility of the urethane compound because it contains both a site with the (thermal decomposable blocked) isocyanate group and a hydrophilic site with the hydrophilic group.

Here, in Formula (1), A, which is the organic polyisocyanate compound in the residue of the organic polyisocyanate compound, from which an active hydrogen group has been eliminated preferably contains an aromatic ring. This is because the (C-2) component is more readily dispersed in the gaps between the polymer chains of the organic fibers.

While not particularly limited, specific examples include, for example, methylene diphenyl polyisocyanate and polyphenylene polymethylene polyisocyanate. Polyphenylene polymethylene polyisocyanates having a number average molecular weight of 6,000 or less are preferred, and polyphenylene polymethylene polyisocyanates having a number average molecular weight of 4,000 or less are particularly preferred.

In Formula (1), X, which is the polyol compound with two or more and four or fewer hydroxyl groups and having a number average molecular weight of 5,000 or less, in the residue of the polyol compound with two or more and four or fewer hydroxyl groups and having a number average molecular weight of 5,000 or less, from which an active hydrogen group has been eliminated, is not particularly limited. Specific examples include compounds selected from the following groups (i) to (vi):
(i) polyhydric alcohols with two or more and four or fewer hydroxyl groups and having a number average molecular weight of 5,000 or less,
(ii) amino alcohols with two or more and four or fewer hydroxyl groups and primary and/or secondary amino groups and having a number average molecular weight of 5,000 or less,
(iii) polyester polyols with two or more and four or fewer hydroxyl groups and having a number average molecular weight of 5,000 or less,
(iv) polybutadiene polyols with two or more and four or fewer hydroxyl groups and having a number average molecular weight of 5,000 or less, and copolymers thereof with other vinyl monomers,
(v) polychloroprene polyols with two or more and four or fewer hydroxyl groups and having a number average molecular weight of 5,000 or less, and copolymers thereof with other vinyl monomers,
(vi) polyether polyols with two or more and four or fewer hydroxyl groups and having a number average molecular weight of 5,000 or less, and
polymeric products of C2-C4 alkylene oxides with polyvalent amines, polyvalent phenols, and amino alcohols, polymeric products of C2-C4 alkylene oxides with C3 or higher polyhydric alcohols, polymeric products of C2-C4 alkylene oxides, or polymeric products of C3-C4 alkylene oxides.

The (C-2) component is not particularly limited, but commercially available products such as ELASTRON BN27, BN77, BN11, and F-2955-D manufactured by DKS Co., Ltd., can be used. Among these, ELASTRON BN77 is preferred.

### <(D) Aqueous Component Having Plurality of Phenolic Hydroxyl Groups in Molecule>

One embodiment of the adhesive composition of the present disclosure includes (A) a rubber latex containing an unsaturated diene, (B) a compound containing an amide group and an amino group in a single molecule, (C) aqueous compound having a (thermally dissociable blocked) isocyanate group, and (D) an aqueous component having a plurality of phenolic hydroxyl groups in a molecule.

The (D) aqueous component having the plurality of phenolic hydroxyl groups in the molecule is preferably a plant-derived aqueous component having a plurality of phenolic hydroxyl groups in the molecule. In this case, the adhesion between an organic fiber and the covering rubber composition is further improved when the adhesive composition is used for the organic fiber.

As the (D) aqueous component having the plurality of phenolic hydroxyl groups in the molecule, a plant-derived polymer having a plurality of phenolic hydroxyl groups in the molecule is preferred, and water-soluble polyphenols are particularly preferred. Specifically, examples include polyphenols such as lignin, tannins, tannic acid, flavonoids, and their derivatives. In this case, the adhesion between an organic fiber and the covering rubber composition is further improved when the adhesive composition is used for the organic fiber.

The (D) aqueous component having the plurality of phenolic hydroxyl groups in the molecule possesses antioxidant characteristics of phenolic compounds due to the presence of the plurality of phenolic hydroxyl groups. This allows it to suppress oxidative degradation reactions at the saturated diene sites of the (A) rubber latex containing an unsaturated diene included in the adhesive composition. Consequently, it can prevent the reduction of unsaturated diene content on the surface of the adhesive composition over time caused by radical oxidation reactions induced by heat or light. Therefore, when the (D) aqueous component having the plurality of phenolic hydroxyl groups in the molecule is used in the adhesive composition, degradation of the adhesion between the organic fiber and a covering rubber composition over time is reduced, and good adhesion is achieved.

Research has long been conducted on the separation of polyphenols such as lignin and tannins, which are components in wood and bark, and their reaction with formaldehyde to produce adhesives (for example, see JP H07-53858 A). However, there is little known research on the production of aqueous adhesive compositions that do not contain resorcin, particularly production of adhesive compositions containing a rubber latex containing an unsaturated diene.

The (D) aqueous component having the plurality of phenolic hydroxyl groups in the molecule is preferably lignin or a derivative thereof. Lignin is a major component of plant cell walls of plants, along with polysaccharides such as cellulose. Lignin contains functional groups such as hydroxyl groups, methoxy groups, carbonyl groups, and carboxyl groups, for example, and in particular, phenolic hydroxyl groups are highly reactive and can interact with cationic substances.

Lignin is a polymer that has a structure based on phenylpropane. Since lignin can assume a wide variety of molecular structures and is a huge biological polymer forming a three-dimensional network structure, the molecular structure thereof has not been fully understood.

Since natural lignin forms a strong composite material together with polysaccharides such as cellulose in plant cell walls, isolating natural lignin without altering the chemical structure thereof is considered very difficult. Various industrial separation methods are used to extract lignin from materials such as wood. Examples of the lignin obtained after separation include lignin sulfonic acid, kraft lignin, soda lignin, and steam-exploded lignin. Among these industrially used lignins, lignosulfonate or kraft lignin, which can be obtained on a large scale from the pulp waste liquor in the chemical pulping used in the paper pulp production process, is a well-known material in view of availability and cost-effectiveness.

Examples of other types of lignin include lignin modified through hydroxymethylation, epoxidation, denitrification, acylation, or hydroxylation; diethanolamine-modified lignin; enzyme-modified lignin; laccase-modified lignin; urea-modified lignin; lignosulfonates; lignin obtained via the Alcell process; lignin obtained via the alkaline granite process; and polyethylene glycol-grafted lignin.

The kraft lignin refers to lignin derived from the chemical pulping method known as the kraft pulping process (a high-temperature, high-pressure reaction), in which wood chips, such as those from hardwood, softwood, mixed wood, bamboo, kenaf, bagasse, and the like, for example, are placed into a digester along with a cooking liquor containing substances such as sodium hydroxide and sodium sulfide, and subjected to high-temperature and high-pressure reactions. The kraft lignin is obtained by adding acid and/or carbon dioxide to the kraft black liquor produced after the kraft pulping process, precipitating the dissolved modified lignin, and then dehydrating and washing the resulting precipitate. Furthermore, the precipitate obtained after dehydration and washing can be dissolved by adding organic solvents such as alcohol or acetone, followed by separation of insoluble impurities and drying for purification. If necessary, modification can be performed to introduce various functional groups. The kraft lignin can be obtained as commercially available products. Among these, a preferred reagent is "Lignin, alkali, kraft" (CAS Number: 8068-05-1) available from Sigma-Aldrich Co. LLC.

The sulfonic acid lignin refers to lignin sulfonic acid and a salt thereof, obtained as raw materials from waste liquids, etc., eluted from sulfite pulp in the chemical pulping process by means of the sulfite pulping method, where wood chips are subjected to high-temperature and high-pressure reactions with a cooking liquor containing sulfite and/or bisulfite. Particularly preferred examples include calcium lignosulfonate, sodium lignosulfonate, potassium lignosulfonate, and magnesium lignosulfonate. Among these, sodium lignosulfonate is preferred. These sulfonic acid lignins are commercially available and can be used as lignosulfonate salts or modified lignosulfonate salts. For example, products such as SUN X series manufactured by Nippon Paper Industries Co., Ltd., can be used as a lignosulfonate salt or a modified lignosulfonate salt.

High-value-added products of lignosulfonate salts include, for example, not only high-purity grades but also partially de-sulfonated (low-sulfonated) lignosulfonate salts. These are obtained by reducing the degree of sulfonation through a method in which lignosulfonate salts are heated in an alkaline water solution containing sodium hydroxide or ammonia in the presence of an oxidizing agent such as oxygen (see, for example, JP 2016-135834 A). As high-purity lignosulfonate salts or modified lignosulfonate salts, products such as PEARLLEX series manufactured by Nippon Paper Industries Co., Ltd., can be used. For partially de-sulfonated lignosulfonate salts, products such as the VANILLEX series manufactured by Nippon Paper Industries Co., Ltd., can be used. Among these, the reagent "Lignin (Alkali)" (CAS Number: 8061-51-6, solid powder) manufactured by Tokyo Chemical Industry Co., Ltd., which is a partially de-sulfonated (low-sulfonation) lignosulfonate salt, is preferred. The (D) aqueous component having the plurality of phenolic hydroxyl groups in the molecule is preferably a derivative of lignin sulfonic acid. When the (D) aqueous component having the plurality of phenolic hydroxyl groups in the molecule is a derivative of lignin sulfonic acid, the adhesion between organic fiber and the covering rubber composition is particularly improved when the adhesive composition is used for the organic fiber. In this specification, "derivatives of lignin sulfonic acid" encompass lignin sulfonate, modified lignin sulfonates, partially desulfonated lignin sulfonic acid, partially desulfonated (low) lignin sulfonic acid salts, and the like.

When the lignin sulfonic acid is a partially de-sulfonated lignin sulfonic acid, it can be preferably used because it has good dispersibility on the surface of the organic fibers during fixation of the organic fibers to be coated (see JP 2002-146028 A).

The tannins refer to a group of polyphenols that are present in a wide range of plants, such as not only woody plants but also fruits, leaves, and seeds, e.g., grapes, persimmons, berries, cloves, legumes, herbs, tea leaves, and cocoa beans. Tannin molecules generally contain numerous hydroxyl groups and often carboxyl groups, and tend to form strong complexes and chelates with various types of macromolecules.

The tannins encompass tannic acid, proanthocyanidins, flavonoids, gallic acid esters, catechins, and also encompass derivatives such as salts and modified products thereof. The flavonoids are ubiquitous in plant leaves, stems, and bark, and are substances generally referred to as tannins, classified into hydrolyzable tannins and condensed tannins. The identification of these tannins can be made by boiling with dilute hydrochloric acid. Condensed tannins form insoluble precipitates, while hydrolyzable tannins undergo hydrolysis to produce water-soluble substances.

Among the tannins mentioned above, both hydrolyzable tannins and condensed tannins are water-soluble and can be extracted from plant materials such as wood, bark, leaves, fruits, pods, and insect galls by methods such as hot water extraction. Hydrolyzable tannins can be obtained from, for example, chestnut, nut tree wood, oak bark, tea leaves, and galls of early stachyurus and gallnut. Condensed tannins can be obtained from the wood of quebracho, the bark of mimosa, the fruits of persimmon and buckwheat, and the like. In particular, condensed tannins obtained from the bark of mimosa, such as the one with the product name "Mimosa" (solid powder) manufactured by Kawamura Corporation, and the like are preferred.

The content of the (D) aqueous component having the plurality of phenolic hydroxyl groups in the molecule in the adhesive composition is not particularly limited but is preferably 1 mass% or more, more preferably 3 mass% or more, and most preferably 5 mass% or more. Furthermore, the content of the (D) aqueous component having the plurality of phenolic hydroxyl groups in the molecule is preferably 60 mass% or less, more preferably 30 mass% or less, and most preferably 20 mass% or less. This is because, when the content of the (D) aqueous component having the plurality of phenolic hydroxyl groups in the molecule is 1 mass% or more, the adhesion between an organic fiber and the covering rubber composition is further improved. Additionally, if the content of the (D) aqueous component having the plurality of phenolic hydroxyl groups in the molecule is 60 mass% or less, it becomes possible to ensure that other components, such as the rubber latex, are blended in the adhesive composition to a relative certain amount or more, and, as a result, the adhesion between the organic fiber and a covering rubber composition is further improved.

### <(E) Multivalent Metal Salt>

One embodiment of the adhesive composition of the present disclosure includes (A) a rubber latex containing an unsaturated diene, (B) a compound containing an amide group and an amino group in a single molecule, (C) an aqueous compound having a (thermally dissociable blocked) isocyanate group, and (E) a multivalent metal salt. The (E) multivalent metal salt is not particularly limited, but can be any salt of a metal ion with a valence of 2 or higher. When the (E) multivalent metal salt is a salt of a metal ion with a valence of 2 or higher, the adhesive strength of the adhesive composition to an organic fiber can be further enhanced.

Preferably, the (E) multivalent metal salt is a water-soluble metal salt, and more preferably a metal salt of a metal ion that is capable of becoming a 4-coordinated or 6-coordinated multivalent metal ion. When the (E) multivalent metal salt is a water-soluble metal salt and is capable of becoming a metal salt of a 4-coordinated or 6-coordinated multivalent metal ion, the adhesive strength of the adhesive composition to an organic fiber can be further increased.

The (E) multivalent metal salt can be used alone or in combination with two or more types.

The (E) multivalent metal salt is not particularly limited, but preferably a metal salt that can dissolve in water serving as a solvent and become a multivalent metal ion (including a complex ion). When a metal ion is polyvalent rather than monovalent, it can interact with multiple components, allowing for ion crosslinking or coordination crosslinking with the fiber surface of the adherend, sites that can interact in the components of the adhesive composition, sulfur-active species that migrate from the rubber to be adhered during vulcanization, etc. This is expected to enhance the fixation or aggregation force with the components.

A particularly preferred multivalent metal ion is a 4-coordinated or 6-coordinated multivalent metal ion. Examples of such a metal salt include dye mordants used as fiber dyeing agents. For example, metal salts such as aluminum, iron, chromium, copper, tin, nickel, and titanium are preferred. Among these, metal salts containing iron and/or copper are more preferred, and metal salts containing copper are particularly preferred. When the (E) multivalent metal salt is a metal salt containing one or more metals selected from the group consisting of iron and copper, the adhesive strength of the adhesive composition to an organic fiber can be enhanced. Moreover, when the (E) multivalent metal salt is a metal salt containing copper, the adhesive strength to an organic fiber can be particularly enhanced.

Specific metal salts are not particularly limited, but examples include iron chloride, tin chloride, alum, copper sulfate, copper acetate, copper oxalate, copper gluconate, aluminum acetate, or natural dye mordants containing these polyvalent metal ions, such as iron liquor or lye. Among these, metal salts containing a copper ion are particularly preferred. In a preferred embodiment of the present disclosure, copper gluconate, which is used as a copper supplement in food additives, is used.

The (E) multivalent metal salt can be dissolved in water by stirring to prepare a water solution of about 0.01 to 5 mass% and added to the adhesive composition. When in this range, the effect of fixation on the surface of an organic fiber can be enhanced, such as the effect of a dye mordant in the dyeing of organic fibers, thereby further enhancing the adhesive strength to the organic fibers.

Additionally, when the (E) multivalent metal salt and the (D) aqueous component having the plurality of phenolic hydroxyl groups in the molecule are included, an interaction occurs between the phenolic hydroxyl groups contained in the (D) aqueous component having the plurality of phenolic hydroxyl groups in the molecule and the cationic metal ions in the (E) multivalent metal salt due to charge transfer. As a result, the cohesive failure resistance force in the adhesive composition layer increases, and the adhesive strength to an organic fiber can be further enhanced.

The content of the (E) multivalent metal salt in the total solid content of the adhesive composition of the present disclosure is not particularly limited but is preferably 0.01 mass% or more, more preferably 0.05 mass% or more. The content of the (E) multivalent metal salt is preferably 3 mass% or less, and more preferably 1.5 mass% or less. This is because, when the content of the (E) polyvalent metal salt is 0.05 mass% or more, the adhesion between an organic fiber and the covering rubber composition is further improved. Additionally, this is because, when the content of the (E) polyvalent metal salt is 3 mass% or less, the thickening of the adhesive composition due to the aggregation effect of the polyvalent metal salt can be suppressed. This prevents excessive sulfur crosslinking under heat from reducing the adhesion, and is also environmentally preferred.

### <Method for Producing Adhesive Composition>

The adhesive composition of the present disclosure contains (A) a rubber latex containing an unsaturated diene; (B) a compound containing an amide group and an amino group in a single molecule; and (C) an aqueous compound having a (thermally dissociable blocked) isocyanate group, and preferably contains one or more components selected from the group consisting of the following (D) to (E):
(D) an aqueous component having a plurality of phenolic hydroxyl groups in a molecule, and
(E) a polyvalent metal salt.

In the production of the adhesive composition, the (A) rubber latex containing an unsaturated diene, the (B) compound containing an amide group and an amino group in the single molecule, the (C) aqueous compound having a (thermally dissociable blocked) isocyanate group, the (D) aqueous component having the plurality of phenolic hydroxyl groups in the molecule, and the (E) polyvalent metal salt can be mixed in any order.

Although not particularly limited, a preferred addition sequence of components in the adhesive composition is as follows: the (E) polyvalent metal salt, the (D) aqueous component having the plurality of phenolic hydroxyl groups in the molecule, the (B) compound containing an amide group and an amino group in the single molecule, the (A) rubber latex containing an unsaturated diene, and the (C) aqueous compound having a (thermally dissociable blocked) isocyanate group.

This is because the (E) polyvalent metal salt, when mixed with the (B) to (D) components, forms a polyion complex, which makes it easier to adhere to the anionic groups on the surface of an organic fiber as the adherend and the anionic groups in the emulsifier on the surface of the rubber latex.

In the adhesive composition of the present disclosure, the mixing mass ratio of the (A) rubber latex containing an unsaturated diene and the (B) compound containing amide and amino groups in the single molecule [(A):(B)] (in terms of solid content) is not particularly limited, but it is preferably in the range of 100:0.1 to 100:40, and more preferably in the range of 100:0.3 to 100:20.

This is because, when the mixing mass ratio is 100:0.1 or more (i.e., a ratio value of 0.001 or more), the (A) rubber latex containing an unsaturated diene can serve as a core and the aqueous component in (B) can form a membrane for protecting the latex particles around them, and an adhesive layer with sufficient strength can be provided. Furthermore, when the mixing mass ratio is 100:40 or less (i.e., a ratio value of 0.4 or less), the membrane of the protective layer film of the matrix of the aqueous component in (B), which is formed around the (A) rubber latex containing an unsaturated diene as a core, will not become excessively thick. When co-vulcanizing the covering rubber composition, which is the adherend, with the adhesive composition, the covering rubber composition, which is the adherend of the organic fiber, and the (A) rubber latex containing an unsaturated diene will compatibly blend, and as a result, the initial adhesion process between the covering rubber composition, which is adherent, and the adhesive composition will proceed favorably.

In the mixing of the (A) rubber latex containing an unsaturated diene and the aqueous component in (B), a known water-soluble material that can enhance the membrane made of the aqueous component (B) in a typical coacervate can be used in combination. For example, Arabic gum, carrageenan, CMCs, organic salts, or electrolyte substances made of inorganic salts other than the (E) polyvalent metal salts mentioned above, such as salts with monovalent cations, e.g., sodium chloride, potassium chloride, ammonium chloride, and salts with anions, e.g., sulfates, phosphates, carbonates, and acetates, can be used. Furthermore, a water-soluble liquid in which the membrane-forming material dissolves less in water than in the liquid per se, such as alcohols, e.g., ethanol or propanol, or water-soluble polymers, e.g., isobutylene-maleic anhydride ring-open copolymer salts, can also be used.

In the adhesive composition of the present disclosure, the mixing mass ratio of the (A) rubber latex containing an unsaturated diene and the (C) aqueous compound having a (thermally dissociable blocked) isocyanate group [(A): (C)] (in terms of solid content) is not particularly limited, but preferably in the range of 100:5 to 100:90, more preferably in the range of 100:10 to 100:70, and even more preferably in the range of 100:20 to 100:60.

This is because, when the mixing mass ratio is 100:5 or higher (i.e., a ratio value of 0.05 or higher), the effect of (C) aqueous compound having a (thermally dissociable blocked) isocyanate group as a crosslinking agent in the adhesive composition tends to be achieved, and the crosslinking agent can maintain the fracture resistance of the adhesive layer, thus preventing a decrease in adhesion under strain. Moreover, when the mixing mass ratio is 100:90 or lower (i.e., a ratio value of 0.9 or lower), the adhesive composition undergoes less curing associated with excessive crosslinking, and the adhesive composition layer maintains its flexibility under strain input during tire operation. This helps to suppress the degradation of the adhesion layer on the organic fiber coated by the adhesive composition or the reduction in the strength of the organic fiber cord under strain.

In one embodiment of the adhesive composition of the present disclosure, (F) a water-soluble epoxy compound can be included as a component of the adhesive composition. The amount of the (F) epoxy compound is not particularly limited, but the mixing mass ratio of the (F) epoxy compound to the total mass of all components in the adhesive composition [(F): mass of the total solid content in the adhesive composition] (in terms of solid content) is preferably in the range of 0.1:100 to 10: 100.

As the (F) water-soluble epoxy compound, specifically, reaction products of polyvalent alcohols with epichlorohydrin, such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythritol polyglycidyl ether, diglycerol polyglycidyl ether, and sorbitol polyglycidyl ether, can be mentioned. When these compounds are used as the epoxy compound, the adhesion between the organic fiber cord and the rubber can be further improved.

Additionally, the components (A) to (E) of the adhesive composition of the present disclosure are preferably aqueous. This is because water, which is less polluting to the environment, can be used as the solvent.

### [Organic Fiber Material]

The adhesive composition produced as described above can be coated on the surface of an organic fiber, such as an organic fiber made of nylon resin, polyester resin, aromatic polyamide resin, or acrylic resin, for example, and an appropriate heat treatment is performed to form an adhesive layer made of the adhesive composition on the surface of the organic fiber (resin substrate), thereby producing an organic fiber material to which an adhesive treatment has been applied.

The organic fiber material of the present disclosure includes an organic fiber and an adhesive layer covering the surface of the organic fiber, wherein the adhesive layer is made of the above-described adhesive composition. This allows the production of an organic fiber material with excellent durability while ensuring environmental friendliness and workability.

Particularly preferably, the material of the organic fiber is nylon resin, polyester resin, aromatic polyamide resin, or acrylic resin. Among them, the material of the organic fiber is preferably nylon resin or polyester resin. In the examples described later, nylon resin was used. When the organic fiber is made of nylon resin, the adhesion is further improved.

Examples of the method for coating the surface of the organic fiber with the adhesive composition include methods such as immersing the organic fiber (particularly an organic fiber cord) in the adhesive composition, applying the adhesive composition with a brush or the like, and spraying the adhesive composition. A suitable method can be selected as needed. The method for coating the adhesive composition on the surface of the organic fiber is not particularly limited. However, when coating the adhesive composition on the surface of the organic fiber, it is preferable to dissolve the adhesive composition in any of the various solvents to reduce the viscosity, because this makes the coating (immersion, application, spraying, etc.) easier. Furthermore, it is environmentally preferable that the solvent used to reduce the viscosity of the adhesive composition primarily consists of water.

The solution concentration of the adhesive composition impregnated into the organic fiber is not particularly limited, but is preferably 5.0 mass% or more and 25.0 mass% or less, more preferably 7.5 mass% or more and 20.0 mass% or less, in terms of the solid content, based on the mass of the organic fiber.

Here, the thickness of the adhesive layer of the adhesive composition is not particularly limited. However, the thickness is preferably 50 µm or less, and more preferably 0.5 µm or more and 30 µm or less.

In particular, when an organic fiber-rubber composite of the present disclosure is applied to tires, if the amount of the adhesive composition applied by the adhesive treatment becomes too thick, the adhesive durability under tire rolling conditions tends to decrease. This is because the adhesive composition at the interface of the adhered fiber material experiences relatively small deformation because the rigidity of the fiber material is high, which allows it to bear the stress caused by strain. However, as the distance from the interface increases, the deformation due to strain becomes larger. Compared to the adhered rubber material, the adhesive composition contains a larger amount of thermosetting condensates, which makes it harder and more brittle, thus more prone to adhesive fatigue under repeated strain. Therefore, the average thickness of the adhesive composition layer is preferably 50 µm or less, and more preferably 0.5 µm or more and 30 µm or less.

The organic fiber is preferably an organic fiber cord made by twisting a plurality of filaments together. When the organic fiber is an organic fiber cord made by twisting a plurality of filaments together, it is particularly suitable for reinforcing rubber articles such as tires and conveyor belts. Moreover, in the organic fiber material, when the organic fiber is an organic fiber cord, the dry mass of the adhesive layer is preferably 0.5 to 6.0 mass% of the mass of the organic fiber cord. By maintaining the dry mass of the adhesive layer within this range, appropriate adhesion can be ensured. The details of the organic fiber cord will be described below.

The organic fiber coated with the adhesive composition can be subjected to drying, heat treatment, and the like, similarly to the organic fiber material described above.

The organic fiber material with the adhesive composition applied to the surface thereof is preferably dried at a temperature of 100°C to 210°C, for example, followed by heat treatment. The heat treatment is preferably carried out at the glass transition temperature of the polymer in the organic fiber (resin substrate) or higher, preferably (the melting temperature of the polymer minus 70°C) or higher and (the melting temperature minus 10°C) or lower. This is because, the mobility of molecules of the polymer is poor at temperatures below the glass transition temperature of the polymer, and thus, the components in the adhesive composition that promote adhesion cannot interact sufficiently with the polymer, resulting in a lack of bonding strength between the adhesive composition and the organic fiber. The organic fiber may also be pretreated with methods such as electron beam irradiation, microwave treatment, corona discharge, or plasma treatment.

### [Rubber Article]

The adhesive composition of the present disclosure described above can be suitably used for reinforcing various rubber articles. A rubber article of the present disclosure is reinforced with the above-described organic fiber material. As a result, it is possible to produce rubber articles with excellent durability while ensuring environmental friendliness and workability. Examples of such a rubber article of the present disclosure include tires, conveyor belts, belts, hoses, and air springs.

### [Organic Fiber-Rubber Composite]

An organic fiber-rubber composite of the present disclosure is a composite of an organic fiber and rubber, wherein the organic fiber is coated with the above-described adhesive composition. This allows for achieving good adhesion without the use of resorcin, providing an organic fiber-rubber composite (particularly an organic fiber cord-rubber composite) with excellent environmental friendliness and workability. The adhesive composition of the present disclosure is particularly excellent in adhesion between an organic fiber such as an organic fiber cord and the covering rubber composition.

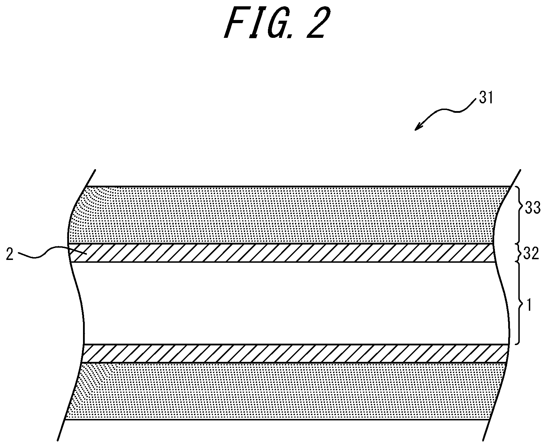

Next, the organic fiber-rubber composite of the present disclosure will be described in detail with reference to FIG. 2.

FIG. 2 is a schematic cross-sectional view of an organic fiber cord-rubber composite, which is one example of the organic fiber-rubber composite of the present disclosure. In an organic fiber-rubber composite 31 illustrated in FIG. 2, the outer surfaces of an organic fiber cord 1 are covered with adhesive layers 32 formed from the adhesive composition 2 of the present disclosure. The organic fiber cord 1 is then bonded to a covering rubber composition 33 located further outward in the radial direction via adhesive layers 32, to form the organic fiber-rubber composite 31 of the present disclosure.

In addition to the organic fiber cord-rubber composite, the form of reinforcing materials for rubber articles comprising the adhesive composition of the present disclosure may also include forms such as short fibers or nonwoven fabrics.

### <Organic Fiber Cord>

An organic fiber cord, which is one example of the organic fiber, is used to reinforce the strength of a rubber article, such as a tire. When the organic fiber cord is used as the reinforcing material, first, spun organic fiber filaments are twisted to form an organic fiber cord. The organic fiber-rubber composite can be produced by embedding such an organic fiber cord into the rubber that covers the organic fiber cord using the adhesive composition, followed by vulcanization to achieve adhesion. This organic fiber-rubber composite can then be used as a reinforcing member for rubber articles such as tires.

The material of the organic fiber is not particularly limited, but examples include polyester fibers, nylon resin fibers such as nylon 6, nylon 6,6, and nylon 4,6 (aliphatic polyamide fibers), protein fibers such as synthetic fibroin fibers, polyetherketone fibers, poly-nonamethylene terephthalamide, aromatic polyamide fibers represented by para-phenylene terephthalamide, acrylic fibers, carbon fibers, and cellulose fibers represented by rayon and lyocell. Among these, polyester, 6-nylon, and 6,6-nylon are preferable, with 6,6-nylon being particularly preferable.

The material of the polyamide fiber is a polymer with amide bonds in the main chain thereof, and more specifically is a polymer in which 80% or more of the repeating units in the main chain are of the amide bond type. Examples of the polyamides are not particularly limited, but include polyamides obtained through condensation of dicarboxylic acids such as adipic acid, sebacic acid, and terephthalic acid, and diamines such as hexamethylenediamine, nonanediamine, methylpentamethylenediamine, p-phenylenediamine, and m-phenylenediamine, via an amide bond reaction. The most representative aliphatic polyamide is 6,6-nylon.

The organic fiber cord is preferably a cord formed by twisting multiple single filament fibers together for reinforcing rubber articles such as tires and conveyor belts. Moreover, the organic fiber cord is preferably an organic fiber cord formed by twisting single fiber filaments with a lower twist and single fiber filaments with an upper twist together. In other words, the cord is preferably formed by applying a lower twist and an upper twist (i.e., the organic fiber cord is preferably a cord formed by twisting a plurality of filaments together, and such a cord formed by twisting a plurality of filaments preferably has an upper twist and a lower twist). In this case, the fiber fineness of the organic fiber cord is preferably in the range of 100 dtex or more and 5000 dtex or less. In the tire of the present disclosure, the twist number (twists/10 cm) is preferably such that the lower twist number is 10 to 50 twists/10 cm. Additionally, in the tire of the present disclosure, the upper twist number is preferably 10 to 50 twists/10 cm. When the organic fiber cord is formed by applying a lower twist and an upper twist, the fiber fineness of the twisted cord is 100 dtex to 5000 dtex, the twist number is 10 to 50 twists/10 cm for the lower twist, and the twist number is 10 to 50 twists/10 cm for the upper twist, the organic fiber cord becomes more suitable for reinforcing rubber articles such as tires and conveyor belts.

In the present disclosure, the organic fiber is preferably a tire cord that is made of 66 nylon and has a twist structure of 1400 dtex/2, an upper twist number of 39 twists/10 cm, and a lower twist number of 39 twists/10 cm, and the adhesive composition applied is applied to the tire cord to form an organic fiber-rubber composite.

### <<Covering Rubber Composition of Organic Fiber-Rubber Composite>>

A covering rubber composition for forming the organic fiber-rubber composite of the present disclosure is preferably a rubber composition in which various compounding agents generally used in the rubber industry are blended into a rubber component. Here, the rubber component is not particularly limited, and examples include, for example, natural rubber, as well as conjugated diene-based synthetic rubbers such as polyisoprene rubber (IR), polybutadiene rubber (BR), styrene-butadiene copolymer rubber (SBR), acrylonitrile-butadiene rubber (NBR), chloroprene rubber (CR), and butyl rubber (IIR). Furthermore, examples include ethylene-propylene copolymer rubber (EPM), ethylene-propylene-diene copolymer rubber (EPDM), and polysiloxane rubber. Among these, natural rubber and conjugated diene-based synthetic rubbers are preferred. These rubber components can be used individually or in combinations of two or more.

### <<Method of Producing Organic Fiber-Rubber Composite>>

The organic fiber-rubber composite of the present disclosure is produced as follows. An organic fiber, such as an organic fiber cord, is coated with the adhesive composition of the present disclosure to form an adhesive layer. The (A) rubber latex containing an unsaturated diene in the adhesive composition and the rubber component in the covering rubber composition, which is the adherend of the organic fiber, are co-vulcanized to achieve adhesion.

Finally, the organic fiber coated with the adhesive composition is adhered by co-vulcanizing the (A) rubber latex containing an unsaturated diene in the adhesive composition and the rubber component in the covering rubber composition, which is the adherent of the organic fiber.

Vulcanizing agents that can be used for the co-vulcanization of the rubber component in the covering rubber composition include, for example, sulfur, thiuram polysulfide compounds such as tetramethylthiuram disulfide and dipentamethylenethiuram tetrasulfide, and organic vulcanizing agents such as 4,4-dithiomorpholine, p-quinone dioxime, p,p'-dibenzquinone dioxime, and cyclic sulfur imides. Among these, sulfur is preferably used. In addition, various compounding agents generally used in the rubber industry, including fillers such as carbon black, silica, and aluminum hydroxide, vulcanization accelerators, antioxidants, and softeners, can be added appropriately to the rubber component in the covering rubber composition.

Furthermore, there is no need to state that the adhesive composition of the present disclosure can also achieve the adhesive effect in an adhesion method wherein the vulcanizing agent contained in the adherend of a synthetic organic fiber material such as an organic fiber and/or the adherend of the covering rubber composition migrates into the adhesive composition, and the adhesive composition is crosslinked by the migrated vulcanizing agent.

### [Tire]

A tire of the present disclosure comprises the above-described organic fiber-rubber composite. This allows for obtaining good adhesion without the use of resorcin, and a tire with excellent environmental friendliness and productivity.

Here, in the tire of the present disclosure, the above-described organic fiber-rubber composite can be used, for example, as a reinforcing layer around the belt, such as the carcass, belt, belt reinforcement layer, flipper, etc.

The tire of the present disclosure may be obtained by shaping an unvulcanized rubber composition, followed by vulcanization, or by shaping a semi-vulcanized rubber that has undergone a preliminary vulcanization step or the like and then performing final vulcanization, depending on the type of tire applied. In the tire of the present disclosure, an organic fiber cord, etc., treated with the above adhesive composition is used in any part of the tire, but other members are not particularly limited, and known members may be used. Furthermore, the tire of the present disclosure is preferably a pneumatic tire. The gas to be filled in the pneumatic tire is normal air or air with adjusted oxygen partial pressure, as well as inert gases, such as nitrogen, argon, and helium, may be used.

In addition to the tire, the adhesive composition, the organic fiber material, and the organic fiber-rubber composite of the present disclosure can also be applied to any rubber articles, such as conveyor belts, belts, hoses, and air springs.

### EXAMPLES

The present disclosure will be described in more detail with reference to the following examples, but the present disclosure is not limited by these examples.

### <(A) Rubber Latex Containing Unsaturated Diene>

In Comparative Examples 1 to 5 and Examples 1 to 13 below, a vinylpyridine-styrene-butadiene copolymer latex was prepared as follows according to Comparative Example 1 disclosed in JP H9-78045 A and used as the (A) rubber latex containing an unsaturated diene.

In a 5-liter autoclave with nitrogen substitution, 130 parts by mass of deionized water and 4.0 parts by mass of potassium rosinate as an emulsifier were charged and dissolved. A monomer mixture of 15 parts by mass of vinylpyridine monomer, 15 parts by mass of styrene, and 70 parts by mass of butadiene, along with 0.60 parts by mass of t-dodecyl mercaptan as a chain transfer agent, were then added and emulsified. Thereafter, the temperature was raised to 50°C, and 0.5 parts by mass of potassium persulfate as a polymerization initiator was added to start polymerization. After the reaction rate of the monomer mixture reached 90%, 0.1 parts by mass of hydroquinone was added to stop the polymerization. Next, the unreacted monomers were removed under reduced pressure, to yield a vinylpyridine-styrene-butadiene copolymer latex with a solid content concentration of 41 mass%.

### <(B) Compound Component Containing Amide Group and Amino Group in Single Molecule>

In Comparative Examples 4 to 5 and Examples 1 to 13 below, as the (B) compound containing an amide group and an amino group in the single molecule, (B-1) a compound component comprising a polyamideamine obtained by condensing diethylene triamine and a dimer acid derived from a tall oil fatty acid, and (B-2) a compound component comprising an adduct of a polyamideamine obtained by condensing triethylene tetramine and a dimer acid derived from a tall oil fatty acid with bisphenol A diglycidyl ether were used.

Here, the product with the product name "Tohmide 296" (liquid) manufactured by T&K TOKA Corporation was used as the (B-1) compound component comprising a polyamideamine obtained by condensing diethylene triamine and a dimer acid derived from a tall oil fatty acid. The product with the product name "Tohmide TXS-53-C" (solid content concentration 40 mass%) manufactured by T&K TOKA Corporation was used as the (B-2) compound component comprising an adduct of a polyamideamine obtained by condensing triethylene tetramine and a dimer acid derived from a tall oil fatty acid with bisphenol A diglycidyl ether. Each of these was diluted with deionized water under stirring to prepare a water solution with a solid content concentration of 5 mass%, and the resulting water solution was used in the preparation of the adhesive composition.

### <(C) Aqueous Compound Having (Thermally Dissociable Blocked) Isocyanate Group>

In Comparative Examples 2 to 3 and Examples 1 to 13 below, (C-1) a methyl ethyl ketoxime blocked-diphenylmethane diisocyanate compound, "DM-6400" manufactured by Meisei Chemical Works, Ltd., (thermal dissociation temperature of the blocking agent: approximately 130°C, solid content: 40 mass%), and (C-2) an aqueous compound having a (thermally dissociable blocked) isocyanate group, "ELASTRON BN77 (F-2955D-1)" manufactured by DKS Co., Ltd., (thermal dissociation temperature of the blocking agent: approximately 160°C, pH: 8.0, solid content: 31 mass%) were used as the (C) aqueous compound having a (thermally dissociable blocked) isocyanate group. These were used as they were.

### <(D) Aqueous Component Having Plurality of Phenolic Hydroxyl Groups in Molecule>

In Examples 7 to 9 and 11 to 13 below, (D-1) a partially desulfonated lignin sulfonate with reduced sulfonation degree, product name "Lignin (Alkali)" manufactured by Tokyo Chemical Industry Co., Ltd., (D-2) a kraft lignin, product name "Lignin, Alkali" manufactured by Sigma-Aldrich Co. LLC, and (D-3) a condensed tannin, product name "Mimosa" manufactured by Kawamura Corporation were used as the (D) aqueous component having the plurality of phenolic hydroxyl groups in the molecule. These polyphenols in solid powders were dissolved in deionized water to produce a solution with a solid content concentration of 10 mass%, and the resulting water solution was used in the preparation of the adhesive composition.

### <(E) Multivalent metal salt>

In Examples 10 to 13 below, (E-1) a copper multivalent metal salt, product name "Copper gluconate (II)" manufactured by Tokyo Chemical Industry Co., Ltd., (E-2) a multivalent metal salt of iron, product name "Iron (II) chloride tetrahydrate" manufactured by Nakalai Tesque, Inc., were used as the (E) multivalent metal salt. These were dissolved in deionized water to adjust the solid content concentration to 0.5 mass%, and the resulting water solution was used in the preparation of the adhesive composition.

### <<Preparation of Latex Adhesive Composition (Comparative Example 1)>>

The above-described rubber latex (A) and water were mixed according to the formulations listed in Table 2 (wet blending) to adjust the solid content concentration to 17 mass%. After thorough stirring, a latex adhesive composition (Comparative Example 1) was obtained.

### <<Preparation of (C) Aqueous Compound Having (Thermally Dissociable Blocked) Isocyanate Group - Latex Adhesive Composition (Comparative Examples 2 to 3)>>

The above-described (A) rubber latex containing an unsaturated diene and (C-1 to C-2) the aqueous compounds having a (thermally dissociable blocked) isocyanate group were mixed according to the formulations listed in Table 2 (wet blending). Water was added to adjust the solid content concentration of the adhesive composition to 17 mass%. After thorough stirring, an aqueous compound having an isocyanate group - latex adhesive composition (Comparative Examples 2 to 3) was obtained.

### <<Preparation of (B) Compound Containing Amide Group and Amino Group in Single Molecule - Latex Adhesive Composition (Comparative Examples 4 to 5)>>

The above-described (A) rubber latex containing an unsaturated diene and the (B-1 to B-2) compounds containing an amide group and an amino group in a single molecule were mixed according to the formulations listed in Table 2 (wet blending). Water was added to adjust the solid content concentration of the adhesive composition to 17 mass%. After thorough stirring, a compound containing an amide group and an amino group - latex adhesive composition (Comparative Examples 4 to 5) was obtained.

### <<Preparation of Adhesive Compositions (Examples 1 to 13), One Embodiment of the Present Disclosure>>

As summarized in the formulations (Wet formulations) in Tables 2 and 3, the following were mixed in the specified order: water for dilution, (E) the polyvalent metal salt (Examples 10 to 13), the (D) aqueous component having the plurality of phenolic hydroxyl groups in the molecule (Examples 7 to 9 and 11 to 12), (B) compound containing an amide group and an amino group in a single molecule (Examples 1 to 13), (A) rubber latex containing an unsaturated diene (Examples 1 to 13), and (C) aqueous compound having a (thermally dissociable blocked) isocyanate group (Examples 1 to 13) so that the solid content of the adhesive composition was 17 mass%. After thorough stirring, adhesive compositions (Examples 1 to 13), one embodiment of the present disclosure, were obtained.

### <Coating of Tire Cord with Each Adhesive Composition>

A tire cord made of 66 nylon with a twist structure of 1400 dtex/2, an upper twist count of 39 twists/10 cm, and a lower twist count of 39 twists/10 cm was used as the organic fiber cord.

The tire cord was immersed in the adhesive compositions of Comparative Examples 1 to 5 and Examples 1 to 13 so that the concentration of the adhesive composition infiltrated into the tire cord was adjusted to 3.3 mass% relative to the mass of the organic fiber cord.

Next, the cord was subjected to drying in a drying zone (135°C for 80 seconds), thermal curing of the resin under tension (tension: 33 N/strand) in a hot zone (235°C for 60 seconds), and thermal curing while relaxing the tension in a normalizing zone (235°C for 60 seconds) to obtain tire cords coated with the adhesive compositions of Comparative Examples 1 to 5 and Examples 1 to 13.

### <Preparation of Tire Cord-Rubber Composite>

The tire cords coated with the adhesive compositions of Comparative Examples 1 to 5 and Examples 1 to 13 were embedded in an unvulcanized rubber composition and co-vulcanized at 160°C for 20 minutes. An unvulcanized rubber composition for covering used was a rubber composition that contained natural rubber, styrene-butadiene rubber, carbon black, a vulcanizing agent, etc.

### <Evaluations of Workability of Adhesive Composition>

The workability of the adhesive composition of each of the comparative examples and examples was evaluated as follows.

### <<Evaluation of Mechanical Stability (Coagulation Rate)>>

The mechanical stability (coagulation rate) of each adhesive composition was measured according to the method using a Maron-type mechanical stability tester (Maron Stability Tester No. 2312-II manufactured by Kumagai Riki Kogyo Co., Ltd.) for copolymer latex compositions specified in JIS K6392-1995.

In summary, each adhesive composition was subjected to shear strain for 10 minutes under a compressive load of 10 kg and a rotational speed of 1000 rpm using the rotor of the above-mentioned Maron-type mechanical stability tester. The coagulation rate (%) was then evaluated from the amount of coagulated matter generated, using the following formula, and the value was rounded to three decimal places. A lower coagulation rate indicates superior mechanical stability. Coagulation Rate (%) = [(Dry mass of coagulated matter)/(solid content mass of the adhesive liquid tested)] × 100

### <<Evaluation of Adhesion to Squeezing Rolls>>

2000 meters of the above-described tire cord, which was an organic fiber cord made of nylon 66, was continuously treated in a dipping machine that stored each adhesive composition. The amount of each adhesive composition adhered to the squeezing rolls was visually inspected and scored on a five-grade scale as follows.
Too much: The amount was remarkably much.
Much: The amount was particularly high.
Intermediate: The amount was moderate.
Little: The amount was little.
Very little: The amount was very little.

### <Evaluations of Adhesion of Adhesive Composition>

The adhesion of the adhesive compositions of each comparative example and example was evaluated as follows:

### <<Evaluation of Adhesive Strength>>

The tire cord-rubber composite obtained using each adhesive composition was stretched at a speed of 300 mm/min to peel the tire cord from the tire cord-rubber composite. The peel strength per tire cord was determined, and this value was taken as the adhesive strength (N/number).

### <<Evaluation of Adhesion State of Coated Rubber>>

The tire cord peeled from the above tire cord-rubber composite was visually inspected for the adhesion state of the coated rubber, and scoring was carried out according to Table 1 below.

**[Table 1]**

| Score of adherence state of coated rubber | Area ratio of coated rubber to tire cord (organic fiber cord) | State of cord filaments |
|---|---|---|
| A+ | - | Filament was cut |
| A | 80% or more and 100% or less | Filament was not cut |
| B | 60% or more and less than 80% | Filament was not cut |
| C | 40% or more and less than 60% | Filament was not cut |
| D | 20% or more and less than 40% | Filament was not cut |
| E | 0% or more and less than 20% | Filament was not cut |

### <Results of Evaluations of Workability and Adhesion of Adhesive Compositions>

The formulations of each adhesive composition of the comparative examples and examples, along with the results of evaluations of the workability and adhesion, are summarized in Tables 2 and 3, respectively.

**[Table 2]**

| | Comstituting components | | Comp. Ex. 1 | Comp. Ex. 2 | Comp. Ex. 3 | Comp. Ex. 4 | Comp. Ex. 5 | Example 1 | Example 2 | Example 3 | Example 4 | Example 5 | Example 6 |
|---|---|---|---|---|---|---|---|---|---|---|---|---|---|
| | (A) Rubber latex | Type | (A-1) | (A-1) | (A-1) | (A-1) | (A-1) | (A-1) | (A-1) | (A-1) | (A-1) | (A-1) | (A-1) |
| | | Content | 100.00 | 70.00 | 70.00 | 99.47 | 99.08 | 69.47 | 68.50 | 67.00 | 69.08 | 68.00 | 60.00 |
| | (B) Amides/amines | Type | - | - | - | (B-1) | (B-2) | (B-1) | (B-1) | (B-1) | (B-2) | (B-2) | (B-2) |
| | | Content | - | - | - | 0.53 | 0.92 | 0.53 | 1.50 | 3.00 | 0.92 | 2.00 | 10.00 |
| Composition in solid component of adhesive composition (dry) (mass%) | (C) Isocyanates | Type | - | (C-1) | (C-2) | - | - | (C-2) | (C-1) | (C-2) | (C-2) | (C-2) | (C-2) |
| | | Content | - | 30.00 | 30.00 | - | - | 30.00 | 30.00 | 30.00 | 30.00 | 30.00 | 30.00 |
| | (D) Phenols | Type | - | - | - | - | - | - | - | - | - | - | - |
| | | Content | - | - | - | - | - | - | - | - | - | - | - |
| | (E) Multivalent metal salts | Type | - | - | - | - | - | - | - | - | - | - | - |
| | | Content | - | - | - | - | - | - | - | - | - | - | - |
| | (A) Rubber latex | Type | (A-1) | (A-1) | (A-1) | (A-1) | (A-1) | (A-1) | (A-1) | (A-1) | (A-1) | (A-1) | (A-1) |
| | | Content | 41.46 | 29.02 | 29.02 | 41.24 | 41.08 | 28.80 | 28.40 | 27.78 | 28.64 | 28.20 | 24.88 |
| | (B) Amides/amines | Type | - | - | - | (B-1) | (B-2) | (B-1) | (B-1) | (B-1) | (B-2) | (B-2) | (B-2) |
| | | Content | - | - | - | 1.80 | 3.13 | 1.80 | 5.10 | 10.20 | 3.13 | 6.80 | 34.00 |
| | (C) Isocyanates | Type | - | (C-1) | (C-2) | - | - | (C-2) | (C-1) | (C-2) | (C-2) | (C-2) | (C-2) |
| Composition of adhesive composition in solution (Wet) (mass%) | | Content | - | 12.75 | 16.45 | - | - | 16.45 | 12.75 | 16.45 | 16.45 | 16.45 | 16.45 |
| | (D) Phenols | Type | - | - | - | - | - | - | - | - | - | - | - |
| | | Content | - | - | - | - | - | - | - | - | - | - | - |
| | (E) Multivalent metal salts | Type | - | - | - | - | - | - | - | - | - | - | - |
| | | Content | - | - | - | - | - | - | - | - | - | - | - |
| | Water | Content | 58.54 | 58.23 | 54.52 | 56.95 | 55.79 | 52.94 | 53.75 | 45.57 | 51.78 | 48.55 | 24.67 |
| Solid content concentration of adhesive composition (mass%) | | | 17.0 | 17.0 | 17.0 | 17.0 | 17.0 | 17.0 | 17.0 | 17.0 | 17.0 | 17.0 | 17.0 |
| Workability evaluation results | Mechanical stability (%) | | 7.94 | 7.65 | 6.01 | 4.22 | 4.69 | 3.75 | 1.54 | 1.62 | 2.03 | 1.94 | 1.77 |
| | Adhesion to squeezing rolls | | Too much | Too much | Much | Intermediate | Much | Little | Little | Little | Little | Little | Little |
| Adhesion evaluation results | Adhesive strength (N/number) | | 3.36 | 8.34 | 12.60 | 4.41 | 5.35 | 21.50 | 19.49 | 20.35 | 21.86 | 24.04 | 19.63 |
| | Adhesion state of rubber | | E | D | C | E | E | A+ | A | A+ | A+ | A+ | B |

**[Table 3]**

| | Comstituting components | | Example 7 | Example 8 | Example 9 | Example 10 | Example 11 | Example 12 | Example 13 |
|---|---|---|---|---|---|---|---|---|---|
| | (A) Rubber latex | Type | (A-1) | (A-1) | (A-1) | (A-1) | (A-1) | (A-1) | (A-1) |
| | | Content | 61.48 | 62.18 | 64.08 | 68.94 | 61.34 | 61.24 | 63.94 |
| | (B) Amides/amines | Type | (B-2) | (B-2) | (B-2) | (B-2) | (B-2) | (B-2) | (B-2) |
| | | Content | 092 | 0.92 | 0.92 | 0.92 | 0.92 | 0.92 | 0.92 |
| Composition in solid component of adhesive composition (dry) (mass%) | (C) Isocyanates | Type | (C-2) | (C-2) | (C-2) | (C-2) | (C-2) | (C-2) | (C-2) |
| | | Content | 30.00 | 30.00 | 30.00 | 30.00 | 30.00 | 30.00 | 30.00 |
| | (D) Phenols | Type | (D-1) | (D-2) | (D-3) | - | (D-1) | (D-2) | (D-3) |
| | | Content | 7.6 | 6.9 | 5.0 | - | 7.6 | 6.9 | 5.0 |
| | (E) Multivalent metal salts | Type | - | - | - | (E-1) | (E-1) | (E-1) | (E-2) |
| | | Content | - | - | - | 0.14 | 0.14 | 0.94 | 0.14 |
| | (A) Rubber latex | Type | (A-1) | (A-1) | (A-1) | (A-1) | (A-1) | (A-1) | (A-1) |
| | | Content | 25.49 | 25.78 | 26.57 | 28.58 | 25.43 | 25.39 | 26.51 |
| | (B) Amides/amines | Type | (B-2) | (B-2) | (B-2) | (B-2) | (B-2) | (B-2) | (B-2) |
| | | Content | 3.13 | 3.13 | 3.13 | 3.13 | 3.13 | 3.13 | 3.13 |
| Composition of adhesive composition in solution (Wet) (mass%) | (C) Isocyanates | Type | (C-2) | (C-2) | (C-2) | (C-2) | (C-2) | (C-2) | (C-2) |
| | | Content | 16.45 | 16.45 | 16.45 | 16.45 | 16.45 | 16.45 | 16.45 |
| | (D) Phenols | Type | (D-1) | (D-2) | (D-3) | - | (D-1) | (D-2) | (D-3) |
| | | Content | 1292 | 11.73 | 8.50 | - | 1292 | 11.73 | 8.50 |
| | (E) Multivalent metal salts | Type | - | - | - | (E-1) | (E-1) | (E-1) | (E-2) |
| | | Content | - | - | - | 4.76 | 4.76 | 31.96 | 4.76 |
| | Water | Content | 42.01 | 42.91 | 45.35 | 47.08 | 37.31 | 11.34 | 40.65 |
| Solid content concentration of adhesive composition (mass%) | | | 17.0 | 17.0 | 17.0 | 17.0 | 17.0 | 17.0 | 17.0 |
| Workability evaluation results | Mechanical stability (%) | | 2.88 | 1.89 | 2.05 | 1.36 | 2.19 | 2.58 | 2.30 |
| | Adhesion to squeezing rolls | | Little | Little | Little | Little | Little | Little | Little |
| Adhesion evaluation results | Adhesive strength (N/number) | | 17.64 | 17.25 | 15.22 | 22.82 | 21.55 | 20.97 | 18.88 |
| | Adhesion state of rubber | | B | B | B | A+ | A+ | A+ | B |

(A-1): Rubber latex containing an unsaturated diene, vinylpyridine-styrene-butadiene copolymer latex synthesized by the method described above, solid content concentration: 41 mass%.

(B-1): Compound containing an amide group and an amino group in a single molecule, polyamideamine obtained by condensation of an alkylene polyamine such as diethylene triamine and a dimer acid derived from a tall oil fatty acid, product name "Tohmide 296" manufactured by T&K TOKA Corporation, water-soluble, amine value: 425, brown liquid, the commercially available aqueous liquid from the manufacturer was used as it was.

(B-2): Compound containing an amide group and an amino group, an adduct of polyamideamine obtained by condensation of triethylene tetramine and a dimer acid derived from a tall oil fatty acid, and bisphenol A diglycidyl ether, product name "Tohmide TXS-53-C" manufactured by T&K TOKA Corporation, water-soluble, amine value: 195 to 215, solid content concentration: 40 mass%.

(C-1): Aqueous compound having a (thermally dissociable blocked) isocyanate group, product name "DM-6400" manufactured by Meisei Chemical Works, Ltd., (dissociation temperature of the blocking agent: approximately 130°C, solid content concentration: 40 mass%), methyl ethyl ketoxime blocked diphenylmethane diisocyanate compound, water dispersion.

(C-2): Aqueous compound having a (thermally dissociable blocked) isocyanate group, product name "ELASTRON BN77 (F-2955D-1)" manufactured by DKS Co., Ltd., (dissociation temperature of the blocking agent: approximately 160°C, pH 8.0, solid content concentration: 31 mass%), water dispersion.

(D-1): Polyphenol (lignin sulfonate), product name "Lignin (Alkali)" (CAS Number: 8061-51-6) manufactured by Tokyo Chemical Industry Co., Ltd., partially desulfonated lignin sulfonate with reduced sulfonation degree, solid powder.

(D-2): Polyphenol (kraft lignin), product name "Lignin, alkali" (CAS Number: 8068-05-1) manufactured by Sigma-Aldrich Co. LLC, kraft lignin, solid powder.

(D-3): Polyphenol (condensed tannin), product name "Mimosa" manufactured by Kawamura Corporation, solid powder.

(E-1): Multivalent metal salt (copper compound), product name "Copper gluconate (II)" (CAS Number: 527-09-3, purity: 97% or higher) manufactured by Tokyo Chemical Industry Co., Ltd., solid powder.

(E-2): Multivalent metal salt (iron compound), product name "Iron chloride (II) tetrahydrate" (CAS Number: 13478-10-9, purity: 98% or higher) manufactured by Nakalai Tesque, Inc., solid powder.

From Tables 2 and 3, it can be understood that the adhesive compositions with good workability and excellent adhesion between the organic fiber and the coating rubber composition were obtained in the examples.

### INDUSTRIAL APPLICABILITY

According to the present disclosure, an adhesive composition can be obtained that ensures the desired adhesion without the use of resorcin and does not compromise workability during use, as well as an organic fiber material, a rubber article, an organic fiber-rubber composite, and a tire comprising the same. Therefore, the present disclosure is useful in industrial fields that manufacture rubber articles such as tires.

### REFERENCE SIGNS LIST

- 1: Organic fiber cord
- 2: Adhesive composition
- 3: Immersion bath (Dipping bath)
- 4: Organic fiber cord coated with adhesive composition
- 5: Squeezing rolls
- 6: Drying zone
- 7: Hot zone
- 8: Normalizing zone
- 31: Organic fiber-rubber composite
- 32: Adhesive layer of adhesive composition
- 33: Coated rubber composition

## Claims

1. An adhesive composition comprising:
(A) a rubber latex containing an unsaturated diene;
(B) a compound containing an amide group and an amino group in a single molecule; and
(C) an aqueous compound having a (thermally dissociable blocked) isocyanate group.

2. The adhesive composition according to claim 1, further comprising one or more components selected from the group consisting of the following (D) to (E):
(D) an aqueous component having a plurality of phenolic hydroxyl groups in a molecule, and
(E) a polyvalent metal salt.

3. The adhesive composition according to claim 1, wherein the (A) rubber latex containing an unsaturated diene comprises at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), and vinylpyridine-styrene-butadiene copolymer rubber (Vp).

4. The adhesive composition according to claim 1, wherein the (B) compound containing an amide group and an amino group in the single molecule is (B-1) an amide condensate containing a polyamine and a polyvalent fatty acid, or (B-2) an epoxy adduct of an amide condensate containing a polyamine and a polyvalent fatty acid.

5. The adhesive composition according to claim 1, wherein the (B) compound containing an amide group and an amino group in the single molecule is a compound obtained by condensing a dimer acid derived from an unsaturated fatty acid with a polyamine.

6. The adhesive composition according to claim 1, wherein the (B) compound containing an amide group and an amino group in the single molecule is a compound obtained by condensing a dimer acid derived from a tall oil fatty acid with a polyamine.

7. The adhesive composition according to claim 1, wherein the (C) aqueous compound having a (thermally dissociable blocked) isocyanate group is (C-1) a water-dispersible (thermally dissociable blocked) isocyanate compound comprising an adduct of a polyisocyanate having an aromatic ring and a blocking agent having one or more active hydrogen groups.

8. The adhesive composition according to claim 7, wherein the (C-1) water-dispersible (thermally dissociable blocked) isocyanate compound comprising an adduct of a polyisocyanate having an aromatic ring and a blocking agent having one or more active hydrogen groups is a blocked methylene diphenyl diisocyanate.

9. The adhesive composition according to claim 1, wherein the (C) aqueous compound having a (thermally dissociable blocked) isocyanate group is (C-2) an aqueous urethane compound having a (thermally dissociable blocked) isocyanate group.

10. The adhesive composition according to claim 9,
wherein the (C-2) aqueous urethane compound having a (thermally dissociable blocked) isocyanate group is a reaction product obtained after mixing
(α) an organic polyisocyanate compound with 3 or more and 5 or fewer functional groups and having a number average molecular weight of 2,000 or less;
(β) a compound with 2 or more and 4 or less active hydrogen groups and having a number average molecular weight of 5,000 or less;
(γ) a thermally dissociable blocking agent; and
(δ) a compound with at least one active hydrogen group and at least one hydrophilic group that is anionic, cationic, or nonionic,
so that a mixing ratio of each component relative to a total amount of (α), (β), (γ), and (δ) is
40 mass% or more and 85 mass% or less for (α),
5 mass% or more and 35 mass% or less for (β),
5 mass% or more and 35 mass% or less for (γ),
5 mass% or more and 35 mass% or less for (δ), and
carrying out a reaction, and
a constituting ratio of the (thermally dissociable blocked) isocyanate group in the reaction product is 0.5 mass% or more and 11 mass% or less when a molecular weight of an isocyanate group (-NCO) is taken as 42.

11. The adhesive composition according to claim 9,
wherein the (C-2) aqueous urethane compound having a (thermally dissociable blocked) isocyanate group is represented by the following general formula (1): 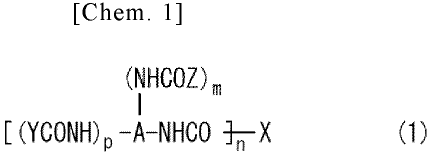 in the formula (1),
A represents a residue of an organic polyisocyanate compound, after active hydrogen atoms have been eliminated,
X represents a residue of a polyol compound with 2 or more and 4 or fewer hydroxyl groups and a number average molecular weight of 5,000 or less, after the active hydrogen atoms have been eliminated,
Y represents a residue of a thermally dissociable blocking agent, after the active hydrogen atoms have been eliminated,
Z represents a residue of a compound having at least one active hydrogen atom and at least one group forming a salt or a hydrophilic polyether chain, after the active hydrogen atoms have been eliminated,
n represents an integer of 2 or more and 4 or less,
p+m represents an integer of 2 or more and 4 or less, where m ≥ 0.25.

12. The adhesive composition according to claim 2, wherein the (D) aqueous component having the plurality of phenolic hydroxyl groups in the molecule is a plant-derived component having a plurality of phenolic hydroxyl groups in a molecule.

13. The adhesive composition according to claim 12, wherein the (D) aqueous component having the plurality of phenolic hydroxyl groups in the molecule is lignin, tannin, tannic acid, flavonoid, or derivatives thereof.

14. The adhesive composition according to claim 13, wherein the (D) aqueous component having the plurality of phenolic hydroxyl groups in the molecule is a derivative of lignin sulfonic acid.

15. The adhesive composition according to claim 2, wherein the (E) polyvalent metal salt is a salt of a metal ion with a valency of 2 or higher.

16. The adhesive composition according to claim 2, wherein the (E) polyvalent metal salt is water-soluble and is capable of becoming a 4-coordinated or 6-coordinated polyvalent metal ion.

17. The adhesive composition according to claim 2, wherein the (E) polyvalent metal salt is a metal salt containing copper.

18. The adhesive composition according to claim 1, being free of resorcin.

19. The adhesive composition according to claim 1, for adhesion to a rubber.

20. The adhesive composition according to claim 1, for adhesion to an organic fiber.

21. The adhesive composition according to claim 1, for adhesion of a rubber and an organic fiber.

22. An organic fiber material comprising an organic fiber and an adhesive layer coating a surface of the organic fiber,
the adhesive layer being made of the adhesive composition according to claim 1.

23. The organic fiber material according to claim 22, wherein the organic fiber is an organic fiber cord formed by twisting a plurality of filaments together.

24. The organic fiber material according to claim 23, wherein the organic fiber cord is formed by applying a lower twist and an upper twist, a fineness of the twisted cord is 100 dtex to 5,000 dtex, a twist number for the lower twist is 10 to 50 twists/10 cm, and a twist number for the upper twist is 10 to 50 twists/10 cm.

25. The organic fiber material according to claim 22, wherein a dry mass of the adhesive layer is 0.5 to 6.0 mass% of a mass of the organic fiber cord.

26. The organic fiber material according to claim 22, wherein the organic fiber is made of nylon resin.

27. A rubber article reinforced with the organic fiber material according to claim 22.

28. An organic fiber-rubber composite being a composite of an organic fiber and rubber, the organic fiber being coated with the adhesive composition according to claim 1.

29. A tire comprising the organic fiber-rubber composite according to claim 28.
